# EUROPÄISCHE PATENTANMELDUNG

(11) **EP 3 659 691 A1**
(43) Veröffentlichungstag der Anmeldung: **03.06.2020**
(21) Anmeldenummer: 20151818.0
(22) Anmeldetag: 31.10.2012
(51) Int. Cl.: B01D 37/02, B01D 41/02, B01J 20/34, B07B 7/01, B07B 7/10, F23C 10/00, F23C 10/02, F23C 10/12, B05B 14/43, F23G 5/30, F23G 7/08

(54) **VERFAHREN ZUM THERMISCHEN AUFBEREITEN EINES HILFSMATERIALS UND AUFBEREITUNGSANLAGE**

(30) Priorität: 02.11.2011 DE 202011107555 U; 03.05.2012 WO PCT/EP2012/058167; 26.10.2012 DE 102012219692; 26.10.2012 DE 102012110243
(62) Teilanmeldung aus: 12788481.5
(71) Anmelder: Dürr Systems AG, 74321 Bietigheim-Bissingen (DE)
(72) Erfinder: Holler, Sebastian, 70176 Stuttgart (DE); Kirschke, Cord, 71282 Hemmingen (DE)
(74) Vertreter: Hoeger, Stellrecht & Partner Patentanwälte mbB

(57) **Zusammenfassung**

Um ein Verfahren zum thermischen Aufbereiten eines Hilfsmaterials, welches zum Reinigen eines mit einem organischen Schadstoff beladenen Rohgasstroms in den Rohgasstrom einbringbar ist und zusammen mit dem organischen Schadstoff ein System aus Schadstoff und Hilfsmaterial bildet, zu schaffen, welches einfach und ressourcenschonend durchführbar ist, wird vorgeschlagen, dass das Verfahren die folgenden Schritte umfasst:
Zuführen des Systems aus Schadstoff und Hilfsmaterial in eine thermische Aufbereitungsvorrichtung;
chemische Umsetzung wenigstens eines Teils des organischen Schadstoffs zur Erzeugung eines aufbereiteten Hilfsmaterials;
Abtrennen des aufbereiteten Hilfsmaterials von dem mit einem organischen Schadstoff beladenen Hilfsmaterial; und Abführen des aufbereiteten Hilfsmaterials aus der thermischen Aufbereitungsvorrichtung.

## Beschreibung

Die vorliegende Erfindung betrifft ein Verfahren zum thermischen Aufbereiten eines Hilfsmaterials, welches zum Reinigen eines mit einem organischen Schadstoff beladenen Rohgasstroms in den Rohgasstrom einbringbar ist und zusammen mit dem organischen Schadstoff ein insbesondere stabiles System aus Schadstoff und Hilfsmaterial bildet.

Mit Schadstoff beladenes Hilfsmaterial kann beispielsweise in einem nasschemischen Verfahren aufbereitet werden.

Der vorliegenden Erfindung liegt die Aufgabe zugrunde, ein Verfahren zum thermischen Aufbereiten eines Hilfsmaterials bereitzustellen, welches einfach und ressourcenschonend durchführbar ist.

Diese Aufgabe wird erfindungsgemäß durch ein Verfahren gemäß Anspruch 1 gelöst.

Insbesondere ist das Verfahren ein Verfahren zum thermischen Aufbereiten eines Hilfsmaterials, bei welchem das Hilfsmaterial zum Reinigen eines mit einem organischen Schadstoff beladenen Rohgasstroms in den Rohgasstrom einbringbar ist.

Das Hilfsmaterial bildet insbesondere zusammen mit dem Schadstoff ein vorzugsweise stabiles System aus Schadstoff und Hilfsmaterial.

Vorzugsweise umfasst das Verfahren Folgendes:
- Zuführen des Systems aus Schadstoff und Hilfsmaterial und vorzugsweise ferner eines gegenüber Normalbedingungen erwärmten Trägergasstroms in eine thermische Aufbereitungsvorrichtung;
- chemische Umsetzung wenigstens eines Teils des organischen Schadstoffs zur Erzeugung eines aufbereiteten Hilfsmaterials;
- Abtrennen des aufbereiteten Hilfsmaterials von dem mit einem organischen Schadstoff beladenen Hilfsmaterial, insbesondere über Transport mittels Gasströmung;
- Abführen des aufbereiteten Hilfsmaterials aus der thermischen Aufbereitungsvorrichtung.

Bei einer Ausgestaltung der Erfindung ist vorgesehen, dass als Hilfsmaterial ein Filterhilfsmaterial gewählt ist, welches zum Reinigen eines mit einem Schadstoff in Form von Lack-Overspray beladenen Rohgasstroms verwendet wird, wobei das Filterhilfsmaterial mit dem Lack-Overspray ein unter Normalbedingungen stabiles System aus mit Lack-Overspray beladenem Filterhilfsmaterial ausbildet, das an einer Filtervorrichtung abscheidbar ist.

Günstig kann es sein, wenn die Aufbereitungsvorrichtung ein Wirbelschichtbasismaterial enthält oder umfasst. Vorzugsweise weist das Wirbelschichtbasismaterial eine chemische Zusammensetzung auf, die der chemischen Zusammensetzung eines als Hilfsmaterial verwendeten Materials entspricht.

Das mit Schadstoff beladene Hilfsmaterial kann insbesondere durch das gemeinsame Aufwirbeln mit einem Wirbelschichtbasismaterial einfach aufbereitet werden.

Unter dem Begriff "Normalbedingungen" ist insbesondere eine Temperatur zwischen ungefähr 20 °C und ungefähr 30 °C zu verstehen.

Der Trägergasstrom kann beispielsweise Luft umfassen oder aus Luft bestehen. Ferner kann vorgesehen sein, dass der Trägergasstrom Stickstoff oder ein oder mehrere andere Inertgase umfasst oder aus Stickstoff oder einem oder mehreren anderen Inertgasen besteht. Der Trägergasstrom kann insbesondere zur Unterstützung der thermischen Aufbereitung ein reaktives Gas oder Gasgemisch und/oder ein inertes Gas oder Gasgemisch umfassen oder aus demselben bestehen.

Als Hilfsmaterial kann insbesondere jedes Medium verwendet werden, welches dazu in der Lage ist, einen Flüssigkeitsanteil des Schadstoffs aufzunehmen.

Hilfsmaterial ist vorzugsweise ein teilchenförmiges und/oder pulverförmiges Material.

Insbesondere kommen als Hilfsmaterialien beispielsweise Kalk, Steinmehl, insbesondere Kalksteinmehl, Aluminiumsilikate, Aluminiumoxide, Siliziumoxide, Pulverlack oder Ähnliches in Betracht.

Alternativ oder ergänzend hierzu können als Hilfsmaterial zur Aufnahme und/oder Bindung des Schadstoffs auch Partikel mit einer Hohlraumstruktur und relativ zu ihren Außenabmessungen großer innerer Oberfläche verwendet werden, beispielsweise natürliche und/oder synthetische Zeolithe oder andere hohle, beispielsweise kugelförmige, Körper aus Polymeren, Glas oder Aluminiumsilikat und/oder natürliche oder synthetisch erzeugte Fasern.

Als Zeolithe werden insbesondere Alumino-Silikate bezeichnet, welche die allgemeine Summenformel Mⁿ⁺_{x/n} [(AlO₂)^{x-} (SiO₂)^{y}] · z H₂O aufweisen (Mⁿ⁺: Metallkation; x/n: stöchiometrischer Faktor, der sich aus der Ladung des Kations und der des Aluminat-Anions ergibt (= "Modul")). Es können beispielsweise Calcium-, Magnesium-, Calcium-Magnesium-, Natrium- und/oder Kalium-Zeolithe verwendet werden. Vorzugsweise werden Mischungen aus zwei oder mehreren dieser Zeolitharten verwendet.

Alternativ oder ergänzend hierzu können als Hilfsmaterial zur Aufnahme und/oder Bindung des Schadstoffs auch chemisch mit dem Schadstoff reagierende Partikel verwendet werden, beispielsweise chemisch reaktive Partikel mit Amin-, Epoxid-, Carboxyl-, Hydroxyl- oder Isocyanat-Gruppen, chemisch reaktive Partikel aus mit Octylsilan nachbehandeltem Aluminiumoxid oder feste oder flüssige Mono-, Oligo- oder Polymere, Silane, Silanole oder Siloxane.

Das Hilfsmaterial besteht vorzugsweise aus einer Vielzahl von Hilfsmaterial-Partikeln, welche insbesondere einen mittleren Durchmesser im Bereich von ungefähr 10 µm bis ungefähr 100 µm aufweisen.

Das Hilfsmaterial ist insbesondere ein fließfähiges, partikelförmiges Material, welches beispielsweise in Form von Filterhilfsmaterial auch als "Precoat"-Material bezeichnet wird.

Das Filterhilfsmaterial dient insbesondere dazu, sich als Sperrschicht an der Oberfläche eines Filterelements abzusetzen, um zu verhindern, dass diese Oberfläche durch anhaftende Lack-Overspray-Partikel verklebt. Durch periodisches Abreinigen des Filterelements gelangt ein System aus Schadstoff und Hilfsmaterial, insbesondere Lack-Overspray und Filterhilfsmaterial, von dem Filterelement in einen Aufnahmebehälter.

Mit Schadstoff beladenes Hilfsmaterial kann insbesondere ein Gemisch oder ein System aus Schadstoff-Teilchen und Hilfsmaterial-Teilchen sein. Beispielsweise kann das Gemisch Konglomerate und/oder Agglomerate aus Teilchen aus Schadstoff und Teilchen aus Hilfsmaterial umfassen.

Teilchen aus Schadstoff sind insbesondere Lacktröpfchen.

Teilchen aus Hilfsmaterial sind insbesondere Steinmehlkörnchen.

Zur Reinigung des mit Schadstoff beladenen Rohgasstroms verwendbares Hilfsmaterial weist vorzugsweise eine Teilchengrößenverteilung auf, welche es ermöglicht, dass zumindest ein Großteil der Teilchen des Hilfsmaterials von dem Rohgasstrom mitgerissen und/oder aufgenommen werden kann.

Es kann vorgesehen sein, dass ein Wirbelschichtbasismaterial chemisch im Wesentlichen dem Hilfsmaterial, insbesondere dem aufzubereitenden Hilfsmaterial, entspricht.

Unter einem chemisch im Wesentlichen dem Hilfsmaterial entsprechenden Material ist insbesondere ein Material zu verstehen, welches im Wesentlichen dieselbe chemische Zusammensetzung wie das Hilfsmaterial aufweist. Insbesondere ist ein chemisch im Wesentlichen dem Hilfsmaterial entsprechendes Material aus dem gleichen Stoff gebildet wie das Hilfsmaterial.

Alternativ oder ergänzend hierzu kann vorgesehen sein, dass das Wirbelschichtbasismaterial ein von dem aufzubereitenden Hilfsmaterial chemisch verschiedenes Hilfsmaterial umfasst. In diesem Fall kann es vorteilhaft sein, wenn das Wirbelschichtbasismaterial eine chemische Zusammensetzung aufweist, welche, gegebenenfalls nach Durchführung eines Zerkleinerungsvorgangs des Wirbelschichtbasismaterials, die Verwendung des Wirbelschichtbasismaterials als Hilfsmaterial ermöglicht.

Insbesondere kann vorgesehen sein, dass das Wirbelschichtbasismaterial mit dem aufzubereitenden Hilfsmaterial kompatibel ist, so dass ein Gemisch aus aufbereitetem Hilfsmaterial und, gegebenenfalls zerkleinertem, Wirbelschichtbasismaterial, zur Reinigung eines mit Schadstoff beladenen Rohgasstroms verwendbar ist.

Als Wirbelschichtbasismaterial kann vorzugsweise jedes partikelförmige Material eingesetzt werden. Dies kann insbesondere ein anorganisches und/oder fließfähiges Material sein. Es kann als reiner Stoff, z. B. als Kalksteinmehl, oder als Gemisch aus verschiedenen Stoffen, z. B. als Gemisch aus Kalksteinmehl und Zeolith, vorliegen.

Durch ein Aufwirbeln des mit Schadstoff beladenen Hilfsmaterials und/oder eines Wirbelschichtbasismaterials wird vorzugsweise eine Wirbelschicht erzeugt, insbesondere eine blasenbildende und/oder eine zirkulierende Wirbelschicht.

Die Aufbereitungsvorrichtung ist insbesondere als ein Wirbelschichtofen ausgebildet.

Eine Filtervorrichtung ist vorzugsweise eine regenerierbare Filtervorrichtung.

Unter einer regenerierbaren Filtervorrichtung ist eine Abtrennvorrichtung zum Abtrennen von Verunreinigungen aus einem durch eine Lackiervorrichtung geführten Gasstrom, insbesondere zum Abtrennen von Schadstoff, insbesondere Lack-Overspray, aus einem Schadstoff enthaltenden Rohgasstrom, zu verstehen, bei welcher abgeschiedene Verunreinigungen abgereinigt werden können, ohne Filterelemente der Filtervorrichtung austauschen zu müssen.

Unter einer regenerierbaren Filtervorrichtung ist insbesondere auch eine Filtervorrichtung zu verstehen, die eines oder mehrere Trockenfilterelemente und/oder Trockenabscheidungsvorrichtungen aufweist, bei denen eine Reinigung eines Gasstroms im Wesentlichen ohne die Zugabe einer Flüssigkeit an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Bei einer regenerierbaren Filtervorrichtung kann ferner vorgesehen sein, dass die Filtervorrichtung mindestens ein Filterelement umfasst, welches im Filterbetrieb mit einer Sperrschicht und/oder einer Schutzschicht versehen ist, welche Filterhilfsmaterial, insbesondere Kalksteinmehl, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Als Lack kommt insbesondere Pulverlack oder Fluidlack in Betracht.

Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols), bezeichnet. Der Begriff "Fluidlack" umfasst insbesondere die Begriffe "Flüssiglack" und "Nasslack".

Bei der Verwendung von Fluidlack ist der Lack-Overspray aus der Lackiervorrichtung somit ein Fluidlack-Overspray, bei der Verwendung von Nasslack ein Nasslack-Overspray.

Vorteilhaft kann es sein, wenn der Median der Teilchengrößenverteilung des Wirbelschichtbasismaterials größer ist als der Median der Teilchengrößenverteilung des zur Reinigung des Rohgasstroms verwendbaren Hilfsmaterials und/oder als der Median der Teilchengrößenverteilung des mit Schadstoff beladenen Hilfsmaterials, insbesondere des Systems aus Schadstoff und Hilfsmaterial.

Der Median der Teilchengrößenverteilung ist diejenige Teilchengröße, welche von 50% der vorhandenen Teilchen nicht erreicht wird, während die weiteren 50% der vorhandenen Teilchen größer als diese Teilchengröße sind.

Insbesondere kann vorgesehen sein, dass der Median der Teilchengrößenverteilung des Wirbelschichtbasismaterials mindestens ungefähr das Doppelte, insbesondere das Dreifache, beispielsweise das Zehnfache, des Medians der Teilchengrößenverteilung des zur Reinigung des Rohgasstroms verwendbaren Hilfsmaterials und/oder des Medians der Teilchengrößenverteilung des mit Schadstoff beladenen Hilfsmaterials beträgt.

Ferner kann vorgesehen sein, dass der Median der Teilchengrößenverteilung des Wirbelschichtbasismaterials höchstens ungefähr das Hundertfache, insbesondere höchstens ungefähr das Fünfzigfache, insbesondere höchstens ungefähr das Dreißigfache, des Medians der Teilchengrößenverteilung des zur Reinigung des Rohgasstroms verwendbaren Hilfsmaterials und/oder des Medians der Teilchengrößenverteilung des mit Schadstoff beladenen Hilfsmaterials beträgt.

Bei einer Ausgestaltung der Erfindung ist vorgesehen, dass das mit Schadstoff beladene Hilfsmaterial in der Aufbereitungsvorrichtung erhitzt wird, so dass Agglomerate aus Schadstoff und Hilfsmaterial aufgebrochen werden.

Vorteilhaft kann es sein, wenn das mit Schadstoff beladene Hilfsmaterial in der Aufbereitungsvorrichtung erhitzt wird, so dass der Schadstoff wenigstens teilweise umgewandelt wird, während Teilchen des Hilfsmaterials unverändert bleiben.

Insbesondere kann dabei vorgesehen sein, dass Teilchen des Hilfsmaterials chemisch unverändert bleiben.

Unter einem Teilchen ist dabei sowohl ein Festkörperteilchen, insbesondere im Falle des Filterhilfsmaterials, als auch ein Tropfen, insbesondere im Falle des Lack-Overspray, zu verstehen.

Insbesondere bei Agglomeraten aus Schadstoff und Teilchen des Hilfsmaterials erfolgt vorzugsweise eine Trocknung und/oder chemische Umwandlung des Schadstoffs. Der Schadstoff, insbesondere die Teilchen des Lack-Overspray, kann hierdurch entweder ganz umgewandelt, beispielsweise verbrannt, werden oder verliert zumindest eine gegebenenfalls zuvor vorhandene haftende Eigenschaft, so dass die Agglomerate aus Schadstoff und Hilfsmaterial in Teilchen des Hilfsmaterials, gegebenenfalls mit Rückständen von Schadstoff, zerfallen.

Insbesondere bei der Verwendung von Kalksteinmehl als Hilfsmaterial kann vorgesehen sein, dass das mit Schadstoff beladene Hilfsmaterial in der Aufbereitungsvorrichtung höchstens auf ungefähr 550°C, beispielsweise auf höchstens ungefähr 500°C, erhitzt wird, um eine unerwünschte chemische Umwandlung des Kalksteinmehls, insbesondere des Kalziumkarbonats, zu verhindern.

Die Aufbereitungsvorrichtung wird vorzugsweise so betrieben, dass sich eine blasenbildende und/oder eine zirkulierende Wirbelschicht ausbildet.

Beispielsweise kann vorgesehen sein, dass eine Aufnahme für die Wirbelschicht einen sich entgegen der Schwerkraftrichtung nach oben hin erweiternden Querschnitt aufweist, wodurch ein sogenanntes "Freeboard" gebildet werden kann.

Günstig kann es sein, wenn die Aufbereitungsvorrichtung so betrieben wird, dass sich ein Gradient in der Teilchengrößenverteilung des Hilfsmaterials, insbesondere eines Gemisches aus mit Schadstoff beladenem Hilfsmaterial und/oder Wirbelschichtbasismaterial, ausbildet, wobei der Median der Teilchengrößenverteilung des Hilfsmaterials, insbesondere des Gemisches, in der Schwerkraftrichtung nach unten hin zunimmt.

Kleine Teilchen des Hilfsmaterials, insbesondere solche ohne Verunreinigung durch Schadstoff, sowie vorzugsweise Abrieb des Wirbelschichtbasismaterials sammeln sich vorzugsweise in einem bezüglich der Schwerkraftrichtung oberen Bereich des Hilfsmaterials, insbesondere des Gemisches aus mit Schadstoff beladenem Hilfsmaterial und Wirbelschichtbasismaterial.

Bei einer Ausgestaltung der Erfindung ist vorgesehen, dass das mit Schadstoff beladene Hilfsmaterial in einem bezüglich der Schwerkraftrichtung unteren Bereich einer in der thermischen Aufbereitungsvorrichtung durch ein Aufwirbeln erzeugten Wirbelschicht der Wirbelschicht zugeführt wird. Auf diese Weise kann eine besonders lange Verweilzeit des mit Schadstoff beladenen Hilfsmaterials in dem Gemisch aus mit Schadstoff beladenem Hilfsmaterial und/oder Wirbelschichtbasismaterial ermöglicht werden.

Teilchen des Systems aus Schadstoff und Hilfsmaterial, Teilchen des aufbereiteten Hilfsmaterials und/oder Teilchen eines Wirbelschichtbasismaterials, welche sich vorzugsweise in einem bezüglich der Schwerkraftrichtung oberen Bereich einer durch das Aufwirbeln erzeugten Wirbelschicht sammeln oder aus der Wirbelschicht herausgetragen werden, werden vorzugsweise aus der Aufbereitungsvorrichtung abgeführt.

Insbesondere kann hierbei vorgesehen sein, dass die Teilchen mittels eines Überlaufs der Aufbereitungsvorrichtung aus der Aufbereitungsvorrichtung abgeführt werden.

Die abgeführten Teilchen sind vorzugsweise zur Reinigung des Rohgasstroms als Hilfsmaterial verwendbar.

Vorteilhaft kann es sein, wenn der Trägergasstrom zum Aufwirbeln von Hilfsmaterial entgegen der Schwerkraftrichtung von unten nach oben durch das Hilfsmaterial geführt wird.

Es kann vorgesehen sein, dass der Trägergasstrom zum Aufwirbeln des Hilfsmaterials entgegen der Schwerkraftrichtung von unten nach oben durch das Hilfsmaterial geführt wird, wobei der Trägergasstrom vor und/oder nach dem Durchströmen des Hilfsmaterials einer Abscheidevorrichtung und/oder einer Verbrennungsvorrichtung zugeführt wird. Auf diese Weise kann ein unerwünschtes Entweichen von möglicherweise schädlichen Stoffen aus der Aufbereitungsvorrichtung vermieden werden.

Eine Abscheidevorrichtung kann insbesondere eine Filtervorrichtung, beispielsweise ein Heißgasfilter, oder ein Zyklon sein.

Der vorzugsweise zum Aufwirbeln des Hilfsmaterials durch das Hilfsmaterial geführte Trägergasstrom kann insbesondere mittels einer Heizvorrichtung erhitzt werden. Beim Durchströmen des Hilfsmaterials kann hierdurch das Hilfsmaterial erhitzt werden.

Vorteilhaft kann es sein, wenn die Verbrennungsvorrichtung eine thermische Nachverbrennungsvorrichtung umfasst. Auf diese Weise können nach dem Durchströmen des Hilfsmaterials höhere Temperaturen als während des Durchströmens des Hilfsmaterials erzielt werden, um insbesondere organische Dämpfe und andere möglicherweise gesundheitsschädliche gasförmige Stoffe möglichst vollständig verbrennen zu können.

Vorteilhaft kann es sein, wenn Teilchen des Hilfsmaterials und/oder Teilchen eines Wirbelschichtbasismaterials mittels des Trägergasstroms aus einer durch ein Aufwirbeln erzeugten Wirbelschicht ausgetragen und zum Abführen aus der Aufbereitungsvorrichtung an der Abscheidevorrichtung abgeschieden werden.

Die Abscheidevorrichtung kann hierzu insbesondere von einer Aufnahme für die Wirbelschicht räumlich getrennt, beispielsweise seitlich versetzt, angeordnet sein. Damit wird insbesondere wirksam reduziert oder komplett vermieden, dass an der Abscheidevorrichtung abgeschiedenes Material zurück in die Aufnahme der Aufbereitungsvorrichtung, in welcher die Wirbelschicht ausgebildet ist, gelangt.

Die Teilchen des mit Schadstoff beladenen Hilfsmaterials und/oder die Teilchen eines Wirbelschichtbasismaterials, welche vorzugsweise aus der Aufbereitungsvorrichtung abgeführt werden, sind insbesondere zur Reinigung des Rohgasstroms verwendbar. Dieses Hilfsmaterial ist somit ein aufbereitetes Hilfsmaterial.

Ferner kann vorgesehen sein, dass der Trägergasstrom zum Aufwirbeln des Hilfsmaterials entgegen der Schwerkraftrichtung von unten nach oben durch das Hilfsmaterial geführt wird, wobei der Trägergasstrom vor und/oder nach dem Durchströmen des Hilfsmaterials einem Wärmetauscher und/oder einer Trocknungsvorrichtung zum Trocknen von Werkstücken zugeführt wird. Auf diese Weise kann die in dem Trägergasstrom vorhandene Wärme effizient weiterverwendet werden.

Der Trägergasstrom dient insbesondere der Erzeugung und/oder der Aufrechterhaltung einer Wirbelschicht.

Es kann vorgesehen sein, dass der abgeführte Trägergasstrom insbesondere einer Trocknungsvorrichtung zum Trocknen von Fahrzeugkarosserien zugeführt wird. Alternativ oder ergänzend hierzu kann vorgesehen sein, dass die in dem Trägergasstrom enthaltene Wärme mittels eines Wärmetauschers auf andere Gasströme oder sonstige Fluidströme übertragen wird. Beispielsweise kann vorgesehen sein, dass die in dem abgeführten Trägergasstrom enthaltene Wärme mittels eines Wärmetauschers auf Zuluft für eine Trocknungsvorrichtung zur Trocknung von Werkstücken, insbesondere Fahrzeugkarosserien, übertragen wird.

Der Trägergasstrom kann ferner aus einer Trocknungsvorrichtung zur Trocknung von Werkstücken stammen und/oder vor dessen Zuführung zu der Aufbereitungsvorrichtung mittels eines Wärmetauschers und eines Fluidstroms aus der Trocknungsvorrichtung erwärmt werden.

Bei einer Ausgestaltung der Erfindung ist eine Steuervorrichtung zum Steuern und/oder Regeln der Vorrichtungen und Anlagen sowie der Bestandteile der Vorrichtungen und Anlagen vorgesehen. Insbesondere kann eine Aufbereitungsanlage mittels mindestens einer Steuervorrichtung gemäß dem erfindungsgemäßen Verfahren gesteuert und/oder geregelt werden.

Die vorliegende Erfindung betrifft ferner eine Aufbereitungsanlage zur thermischen Aufbereitung eines Hilfsmaterials, welches zum Reinigen eines mit einem organischen Schadstoff beladenen Rohgasstroms in den Rohgasstrom einbringbar ist und zusammen mit dem organischen Schadstoff ein insbesondere stabiles System aus Schadstoff und Hilfsmaterial bildet.

Der Erfindung liegt diesbezüglich die Aufgabe zugrunde, eine Aufbereitungsanlage bereitzustellen, mittels welcher Hilfsmaterial einfach und ressourcenschonend aufbereitbar ist.

Diese Aufgabe wird bei einer Aufbereitungsanlage zur thermischen Aufbereitung eines Hilfsmaterials dadurch gelöst, dass die Aufbereitungsanlage Folgendes umfasst:
- eine thermische Aufbereitungsvorrichtung zur chemischen Umsetzung wenigstens eines Teils des organischen Schadstoffs zur Erzeugung eines aufbereiteten Hilfsmaterials;
- eine Zuführvorrichtung zum Zuführen des Systems aus Schadstoff und Hilfsmaterial und vorzugsweise ferner eines gegenüber Normalbedingungen erwärmten Trägergasstroms zu der thermischen Aufbereitungsvorrichtung;
- eine Abtrennungsvorrichtung zum Abtrennen des aufbereiteten Hilfsmaterials von dem mit einem organischen Schadstoff beladenen Hilfsmaterial, insbesondere über Transport mittels Gasströmung;
- eine Abführvorrichtung zum Abführen des aufbereiteten Hilfsmaterials aus der Aufbereitungsvorrichtung.

Die erfindungsgemäße Aufbereitungsanlage weist vorzugsweise einzelne oder mehrere der im Zusammenhang mit dem erfindungsgemäßen Verfahren zum thermischen Aufbereiten eines Hilfsmaterials beschriebenen Merkmale und/oder Vorteile auf.

Insbesondere kann vorgesehen sein, dass mittels der Zuführvorrichtung mit Schadstoff beladenes Hilfsmaterial in einem bezüglich der Schwerkraftrichtung unteren Bereich einer durch ein Aufwirbeln in der thermischen Aufbereitungsvorrichtung erzeugten Wirbelschicht der Wirbelschicht zuführbar ist. Insbesondere ist das mit Schadstoff beladene Hilfsmaterial hierfür einem bezüglich der Schwerkraftrichtung unteren Bereich einer Aufnahme der Aufbereitungsvorrichtung zur Aufnahme des Hilfsmaterials und/oder eines Wirbelschichtbasismaterials zuführbar.

Die Aufbereitungsvorrichtung ist insbesondere als ein Wirbelschichtofen ausgebildet.

Insbesondere kann vorgesehen sein, dass die Aufbereitungsvorrichtung eine Aufnahme umfasst, welche einen gasdurchlässigen Boden umfasst. Auf diese Weise kann das in der Aufnahme aufgenommene Material, insbesondere ein Wirbelschichtbasismaterial und/oder mit Schadstoff beladenes Hilfsmaterial, besonders einfach mit Gas, insbesondere Trägergas, angeströmt, durchströmt und somit aufgewirbelt werden.

Ferner kann vorgesehen sein, dass die Aufbereitungsanlage eine Heizvorrichtung umfasst, mittels welcher die Aufnahme, der gasdurchlässige Boden und/oder das zugeführte Gas, das heißt der Trägergasstrom, heizbar ist.

Günstig kann es sein, wenn mittels der Abführvorrichtung Teilchen des Hilfsmaterials, insbesondere des mit Schadstoff beladenen Hilfsmaterials, und/oder Teilchen eines Wirbelschichtbasismaterials in einem bezüglich der Schwerkraftrichtung oberen Bereich einer durch ein Aufwirbeln erzeugten Wirbelschicht abführbar sind. Insbesondere kann hierfür ein Überlauf vorgesehen sein.

Günstig kann es sein, wenn die Aufbereitungsanlage eine Abscheidevorrichtung und/oder eine Verbrennungsvorrichtung umfasst, welcher der Trägergasstrom zuführbar ist, der insbesondere zum Aufwirbeln eines Wirbelschichtbasismaterials und/oder des mit Schadstoff beladenen Hilfsmaterials durch das Wirbelschichtbasismaterial und/oder das mit Schadstoff beladene Hilfsmaterial führbar ist.

Die erfindungsgemäße Aufbereitungsanlage eignet sich insbesondere zur Verwendung in einer Lackieranlage.

Die vorliegende Erfindung betrifft ferner eine Lackieranlage zum Lackieren von Werkstücken.

Der Erfindung liegt diesbezüglich die Aufgabe zugrunde, eine Lackieranlage bereitzustellen, welche besonders einfach oder ressourcenschonend betreibbar ist.

Diese Aufgabe wird erfindungsgemäß dadurch gelöst, dass die Lackieranlage zum Lackieren von Werkstücken, insbesondere Fahrzeugkarosserien, Folgendes umfasst:
- eine Lackiervorrichtung, mittels welcher die Werkstücke mit Lack lackierbar sind;
- eine Filtervorrichtung zur Reinigung eines in der Lackiervorrichtung erzeugten, mit Lack-Overspray beladenen Rohgasstroms durch Zuführen von Filterhilfsmaterial zu dem Rohgasstrom und Abscheiden des Lack-Overspray zusammen mit dem Filterhilfsmaterial an einem Filterelement der Filtervorrichtung; und
- eine erfindungsgemäße Aufbereitungsanlage,
   wobei der organische Schadstoff Lack-Overspray ist und wobei das Hilfsmaterial Filterhilfsmaterial ist.

Durch die Verwendung einer erfindungsgemäßen Aufbereitungsanlage ist die erfindungsgemäße Lackieranlage besonders einfach und ressourcenschonend betreibbar.

Die Lackieranlage umfasst vorzugsweise ferner eine Mischungsvorrichtung, mittels welcher frisches Hilfsmaterial und aufbereitetes Hilfsmaterial zusammenführbar und mischbar sind. Das gemischte Hilfsmaterial ist vorzugsweise der Filtervorrichtung der Lackieranlage zuführbar.

Ferner kann vorgesehen sein, dass die Lackieranlage mindestens eine Messvorrichtung zur Messung und/oder zum Ermitteln eines Anteils an Schadstoff in dem mit Schadstoff beladenen Hilfsmaterial, das heißt eines Beladungsgrads des Hilfsmaterials mit Schadstoff, umfasst.

Ferner können das erfindungsgemäße Verfahren, die erfindungsgemäße Aufbereitungsanlage und/oder die erfindungsgemäße Lackieranlage einzelne oder mehrere der nachfolgend beschriebenen Merkmale und/oder Vorteile aufweisen:
Ein Abrieb von Teilchen eines Wirbelschichtbasismaterials dient vorzugsweise dem Verdünnen des aufzubereitenden Hilfsmaterials, insbesondere von gegebenenfalls im Hilfsmaterial verbleibenden Reststoffen, insbesondere Aluminium-Flakes aus Metalliclacken.

Insbesondere bei der Verwendung von Kalksteinmehl als Hilfsmaterial kann vorgesehen sein, dass die Temperatur des Wirbelschichtbasismaterials und/oder des Hilfsmaterials in der Aufbereitungsvorrichtung so gewählt wird, dass das Kalksteinmehl weder verbrennt noch eine Kalzinierung erfolgt. Insbesondere kann vorgesehen sein, dass das Verfahren an einem Temperaturplateau zwischen Verbrennung und Kalzinierung des Kalksteinmehls betrieben wird.

Es kann auch vorgesehen sein, dass die Aufbereitungsvorrichtung bei sehr hohen Temperaturen, bei welchen das Wirbelschichtbasismaterial und/oder das Hilfsmaterial chemisch umgewandelt werden, betrieben wird. Die entstehenden Materialien können dann insbesondere anderweitig verwendet werden.

Es kann vorgesehen sein, dass Zeolithe als Hilfsmaterial und/oder Wirbelschichtbasismaterial verwendet werden. Zeolithe verändern sich chemisch vorzugsweise nur geringfügig bei höheren Temperaturen.

Die Verwendung von anorganischen Materialien, beispielsweise Quarz (SiO₂) als Wirbelschichtbasismaterial und/oder als Hilfsmaterial ermöglicht die Verwendung von sehr hohen Temperaturen, beispielsweise bis zu 1000°C. Hierdurch können insbesondere organische Materialien aus dem Hilfsmaterial herausgebrannt werden. Eine thermische Nachverbrennung ist dann vorzugsweise entbehrlich. In einem modifizierten Beispiel werden Sande, gegebenenfalls als Mischungen, auch Quarzsand, als Wirbelschichtbasismaterial und/oder als Hilfsmaterial verwendet.

Es kann vorgesehen sein, dass mittels einer thermischen Nachverbrennung (TNV) Stoffe, welche insbesondere in dem durch das Wirbelschichtbasismaterial und/oder das mit Schadstoff beladene Hilfsmaterial durchgeleiteten Gasstrom, insbesondere Trägergasstrom, enthalten sind, verbrannt werden.

Eine thermische Nachverbrennungsvorrichtung kann beispielsweise eine der Aufbereitungsanlage zugeordnete, separate thermische Nachverbrennungsvorrichtung oder eine in einer Lackieranlage bereits vorhandene thermische Nachverbrennungsvorrichtung sein.

Eine thermische Nachverbrennungsvorrichtung ist vorzugsweise nach einer Abscheidungsvorrichtung, insbesondere nach einem Heißgasfilter, der Aufbereitungsanlage angeordnet.

Günstig kann es sein, wenn die thermische Nachverbrennungsvorrichtung als eine Fackel ausgebildet ist. Hierdurch können insbesondere unvollständig verbrannte, organische Bestandteile des durch das Wirbelschichtbasismaterial und/oder das mit Schadstoff beladene Hilfsmaterial geleiteten Gasstroms vollständig zu Kohlenstoffdioxid verbrannt werden.

Die Verwendung einer separaten thermischen Nachverbrennungsvorrichtung für die Aufbereitungsanlage kann die Integration der Aufbereitungsanlage in eine Lackieranlage vereinfachen, da der Aufstellungsort der Aufbereitungsanlage dann im Wesentlichen unabhängig von einer thermischen Nachverbrennungsvorrichtung der Lackieranlage ist.

Die Verbrennung ist vorzugsweise ein exothermer Prozess, so dass die dabei entstehende Abwärme verwendet werden kann, andere Prozessluft, insbesondere einen Gasstrom, zu erhitzen, insbesondere vorzuwärmen. Die nötige Heizleistung der thermischen Aufbereitungsvorrichtung kann hierdurch vorzugsweise verringert werden.

Als Heizvorrichtung zum Aufheizen des durch das Wirbelschichtbasismaterial und/oder das mit Schadstoff beladene Hilfsmaterial geleiteten Gasstroms wird vorzugsweise eine elektrische Heizvorrichtung verwendet.

Alternativ oder ergänzend hierzu kann der Gasstrom mittels Abluft aus einer Trocknungsvorrichtung zur Trocknung von Werkstücken, insbesondere Fahrzeugkarosserien, erhitzt werden. Insbesondere kann dabei vorgesehen sein, dass ein Teil der Abluft der Trocknungsvorrichtung abgezweigt, durch die Aufbereitungsvorrichtung, insbesondere das Wirbelschichtbasismaterial und/oder das mit Schadstoff beladene Hilfsmaterial, geleitet und gegebenenfalls anschließend einer thermischen Nachverbrennungsvorrichtung zugeführt wird. Hierdurch bleibt der der thermischen Nachverbrennungsvorrichtung zugeführte Gesamtluftvolumenstrom vorzugsweise wenigstens näherungsweise unverändert, und daraus resultierend auch die Auslegung und die Größe der thermischen Nachverbrennungsvorrichtung.

Günstig kann es sein, wenn die Abluft aus einer Trocknungsvorrichtung mit Lösemitteln belastet ist. Bei der Einleitung der Abluft als Gasstrom in das Wirbelschichtbasismaterial und/oder das mit Schadstoff beladene Hilfsmaterial kann hierdurch das bereits in dem Gasstrom enthaltene Lösemittel zum Heizen des Gasstroms verwendet werden, so dass weniger zusätzliche Energie zum Heizen benötigt wird.

Günstig kann es sein, wenn mehrere Prozessluftströme (Gasströme), insbesondere über ein Regelventil, in die Aufbereitungsvorrichtung eingeleitet werden. Insbesondere bei der Verwendung unterschiedlich heißer Prozessluftströme kann durch die Verwendung eines Regelventils die Temperatur des der Aufbereitungsvorrichtung zugeführten Gasstroms gezielt eingestellt werden.

Insbesondere kann vorgesehen sein, dass ein Teilluftstrom des Gasstroms überhitzt ist, beispielsweise eine Temperatur von 700°C aufweist, um endotherme Prozesse auszugleichen.

Ferner kann vorgesehen sein, dass ein Teilluftstrom aus einem anderen Gas, beispielsweise Stickstoff, Sauerstoff, Kohlenstoffdioxid, besteht oder ein anderes Gas in erhöhter Konzentration umfasst, um durch Reaktionen dieses Gases in der Aufbereitungsvorrichtung die Verbrennung und/oder Umwandlung des Schadstoffs gezielt zu beeinflussen.

Es kann vorgesehen sein, zwei Prozessluftströme so in die Aufbereitungsvorrichtung einzuleiten, dass jeder Prozessluftstrom über den Brenner, also mit Prozesstemperatur, oder ohne Brenner, also mit Raumtemperatur, in die Aufbereitungsvorrichtung eingeleitet werden kann. Ist einer der Prozessluftströme Abluft einer Trocknungsvorrichtung, so kann hierdurch sehr flexibel auf mögliche Zustandsänderungen (Betriebszustandsänderungen) der Lackieranlage reagiert werden. Beispielsweise kann ein schnelles Aufheizen der Aufbereitungsvorrichtung, insbesondere des Wirbelschichtbasismaterials und/oder des mit Schadstoff beladenen Hilfsmaterials, mittels Abluft einer Trocknungsvorrichtung erfolgen, wenn die Abluft bereits ein vorgegebenes Temperaturniveau aufweist. Ferner kann die Aufbereitungsvorrichtung hierdurch auch ohne den Betrieb einer Trocknungsvorrichtung zuverlässig betrieben werden. Lösemittel aus der Abluft können in einer Brennkammer der Aufbereitungsvorrichtung, insbesondere im Bereich des Wirbelschichtbasismaterials und/oder des mit Schadstoff beladenen Hilfsmaterials, verbrannt werden. Unterschiedliche Lackkonzentrationen (Beladungsgrade) in dem mit Schadstoff beladenen Hilfsmaterial können hierdurch vorzugsweise ausgeglichen werden. Ferner kann die Aufbereitungsvorrichtung mittels Luft, deren Temperatur Raumtemperatur ist, gekühlt werden.

Es kann vorgesehen sein, dass ein Teilluftstrom, welcher in die Aufbereitungsvorrichtung eingeleitet, insbesondere durch das Wirbelschichtbasismaterial und/oder das mit Schadstoff beladene Hilfsmaterial durchgeleitet, wird, die Abluft der Aufbereitungsvorrichtung ist, welche insbesondere eine Temperatur von über ungefähr 400°C aufweist. Dieser Teilluftstrom kann die gesamte Abluft der Aufbereitungsvorrichtung oder einen beliebigen Teil davon umfassen.

Es kann auch vorgesehen sein, dass Teilluftströme an voneinander verschiedenen Stellen der Aufbereitungsvorrichtung in die Aufbereitungsvorrichtung eingeleitet, insbesondere dem Wirbelschichtbasismaterial und/oder dem mit Schadstoff beladenen Hilfsmaterial zugeführt, werden. Beispielsweise kann vorgesehen sein, dass ein Teilluftstrom direkt über einem Boden einer Aufnahme für das Wirbelschichtbasismaterial und/oder das mit Schadstoff beladene Hilfsmaterial, insbesondere über einem Wirbelbett, zugegebenen wird, insbesondere um die Ausbildung einer Wirbelschicht zu verbessern.

Es kann vorgesehen sein, dass, insbesondere über spezielle Düsengeometrien, mittels einer Zugabe von Prozessluft im sogenannten Freeboard Wirbel erzeugt werden, welche den Austrag von Partikeln aus der Wirbelschicht begünstigen oder erschweren, das heißt die Verweilzeit der Teilchen in der Aufbereitungsvorrichtung kann reduziert bzw. verlängert werden.

Günstig kann es sein, Prozessluft an verschiedenen Stellen in die Aufbereitungsvorrichtung einzuleiten. Hierdurch kann insbesondere eine "stöchiometrische Schichtung" in der Aufbereitungsvorrichtung erzeugt werden, das heißt, dass an unterschiedlichen Stellen in der Aufbereitungsvorrichtung unterschiedliche Sauerstoffkonzentrationen vorherrschen. So kann beispielsweise stöchiometrisch im Überschuss vorhandener Sauerstoff die Verbrennung von Schadstoff begünstigen. Insbesondere um die bei den bevorzugten Materialtemperaturen von höchstens ungefähr 550°C unvollständig ablaufenden Verbrennungsreaktionen zu begünstigen. Insbesondere können hierbei einzelne, bei in der Schwebe vorliegenden Teilchen erfolgende Verbrennungsprozesse begünstigt werden.

Prozessluft für die thermische Aufbereitungsvorrichtung, das heißt insbesondere die durch das Wirbelschichtbasismaterial und das mit Schadstoff beladene Hilfsmaterial geleitete Luft (Trägergasstrom) kann beispielsweise über einen Luft-Wärmetauscher vorgeheizt werden. Als wärmeabgebende Prozessluftströme kommen insbesondere Abluftströme aus einer thermischen Nachverbrennungsvorrichtung in Betracht.

Da die Verbrennung von organischen Materialien zu Kohlenstoffdioxid ein exothermer Prozess ist, muss gegebenenfalls nach der Hochlaufphase (Anfahrvorgang) der Aufbereitungsanlage eine Kühlung erfolgen. Als Kühlluft kann beispielsweise Hallenluft vorgesehen sein. Der Wärmetauscher einer thermischen Nachverbrennungsvorrichtung kann hierfür beispielsweise mittels eines Bypasses umgangen werden.

Wenn die exotherme Reaktion in der Aufbereitungsvorrichtung zu stark wird, so kann eine weitere Kühlung in der Aufbereitungsvorrichtung notwendig werden. Hierzu kann insbesondere die zum Aufwirbeln des mit Schadstoff beladenen Hilfsmaterials und/oder des Wirbelschichtbasismaterials verwendete Luftmenge erhöht werden. Vorzugsweise ist darauf zu achten, dass das mit Schadstoff beladene Hilfsmaterial die Wirbelschicht nicht verlässt.

Alternativ oder ergänzend hierzu kann die Zufuhr von mit Schadstoff beladenem Hilfsmaterial zu der thermischen Aufbereitungsvorrichtung, insbesondere zu dem Wirbelschichtbasismaterial, reduziert oder ganz gestoppt werden. Wird alternativ oder ergänzend die der Aufbereitungsvorrichtung zugeführte Luftmenge soweit reduziert, dass Sauerstoff stöchiometrisch im Unterschuss vorhanden ist, kann eine Pyrolyse erfolgen, so dass Teere, Ruß und/oder Asche entstehen können.

Die Aufbereitungsvorrichtung umfasst vorzugsweise eine Steuerungs- oder Regelvorrichtung, mittels welcher die Temperatur des der Aufbereitungsvorrichtung zugeführten Gasstroms, der Massenstrom des der Aufbereitungsvorrichtung zugeführten Gasstroms sowie die Menge des zugeführten mit Schadstoff beladenen Hilfsmaterials steuerbar und/oder regelbar sind.

Eine Regelung kann beispielsweise in Abhängigkeit von einem beispielsweise mittels einer Messvorrichtung ermittelten Sauerstoffgehalt in der Aufbereitungsvorrichtung erfolgen. So kann mittels der Steuerungsvorrichtung die Zuführung von mit Schadstoff beladenem Hilfsmaterial gedrosselt oder ganz gestoppt werden, wenn die Sauerstoffkonzentration in der Aufbereitungsvorrichtung zu gering ist, beispielsweise gleich oder geringer als ungefähr 5 % ist. Die Zuführvorrichtung, beispielsweise eine Förderschnecke, kann hierzu beispielsweise mittels eines Frequenzumrichters gesteuert werden, welcher in Abhängigkeit von einem Signal eines Sauerstoff-Sensors der Messvorrichtung gedrosselt wird, insbesondere bis zum vollständigen Förderstopp. Hierdurch kann gewährleistet werden, dass Schadstoffe des mit Schadstoff beladenen Hilfsmaterials im Wesentlichen vollständig abbrennen können, bevor weiteres mit Schadstoff beladenes Hilfsmaterial zugeführt wird.

Bei einer Ausgestaltung der Erfindung kann vorgesehen sein, dass beispielsweise mittig zentriert in einer Aufnahmevorrichtung zur Aufnahme des Wirbelschichtbasismaterials und/oder des mit Schadstoff beladenen Hilfsmaterials, in welcher vorzugsweise durch ein Aufwirbeln eine Wirbelschicht erzeugt werden kann, eine Strömungsführung (Luftführung), beispielsweise ein Rohr, angeordnet ist. Darin strömt der Gasstrom vorzugsweise in der Schwerkraftrichtung von oben nach unten und wird durch die herrschenden Temperaturen bereits vorgewärmt. Damit verlaufen die Rohrleitungen wenigstens teilweise, vorzugsweise größtenteils, oder auch vollständig innerhalb der Aufbereitungsvorrichtung.

Vorteilhaft kann es sein, wenn die Aufbereitungsvorrichtung eine Aufnahme umfasst, deren Boden als ein Düsenboden ausgebildet ist. Insbesondere kann vorgesehen sein, dass ein Düsenboden als ein Glockenboden ausgebildet ist. Bei der Verwendung von Düsenböden ergibt sich insbesondere ein geringer Druckverlust bei der Einleitung des Gasstroms zum Aufwirbeln des mit Schadstoff beladenen Hilfsmaterials und/oder des Wirbelschichtbasismaterials.

Alternativ hierzu kann vorgesehen sein, dass ein Boden der Aufnahme der Aufbereitungsvorrichtung eine Fluidisiereinrichtung, beispielsweise eine aus Sinterkeramik oder Sintermetall gebildete Fluidisiereinrichtung, umfasst. Hierdurch kann der Gasstrom besonders gleichmäßig über die gesamte Fläche des Bodens eingebracht werden. Damit ist es konstruktiv auf besonders einfache Weise möglich, das mit Schadstoff beladene Hilfsmaterial effektiv, insbesondere mit dem Wirbelschichtbasismaterial, zu verwirbeln.

Vorzugsweise können weitere Stoffe mit organischem Anteil in der Aufbereitungsvorrichtung verbrannt werden. Beispielsweise kann eine Kabinenfolierung, die nach Entfernen aus einer als Lackierkabine ausgebildeten Lackiervorrichtung der Lackieranlage mit Lack verunreinigt ist, zerkleinert, insbesondere geschreddert, werden und als zusätzlicher Feststoffstrom dem Wirbelschichtbasismaterial und/oder dem mit Schadstoff beladenen Hilfsmaterial zugeführt werden. Hierdurch kann der Brennwert des aufzubereitenden Materials erhöht werden.

Die Aufbereitungsanlage ist vorzugsweise so ausgebildet, dass selbst dann, wenn mehrere Stoffströme, Materialströme und/oder Gasströme vorgesehen sind, eine thermische Aufbereitung von mit Schadstoff beladenem Hilfsmaterial stets auch nur unter Verwendung eines Gasstroms und des aufzubereitenden, mit Schadstoff beladenen Hilfsmaterials möglich ist.

Bei einer Ausgestaltung der Erfindung kann vorgesehen sein, dass die Aufbereitungsvorrichtung einen Heißgasfilter umfasst, durch welchen der Gasstrom geführt ist. Die Aufbereitungsvorrichtung wird, vorzugsweise kontinuierlich, mittels der Zuführvorrichtung, beispielsweise einer Förderschnecke, mit mit Schadstoff beladenem Hilfsmaterial beschickt, welches hierzu beispielsweise knapp oberhalb eines Bodens einer Aufnahme der Aufbereitungsvorrichtung zugeführt wird. Durch den Materialeintrag in die Aufbereitungsvorrichtung steigt die Füllhöhe in der Aufbereitungsvorrichtung an. Teilchen von Hilfsmaterial und/oder Abrieb von Wirbelschichtbasismaterial, welche sich im bezüglich der Schwerkraftrichtung oberen Ende der beispielsweise durch das Aufwirbeln erzeugten Wirbelschicht ansammeln, können beispielsweise mittels eines Überlaufs aus der Aufbereitungsvorrichtung abgeführt werden. Das so entnommene aufbereitete Hilfsmaterial wird dann vorzugsweise gekühlt.

Bei einer weiteren Ausführungsform kann vorgesehen sein, dass die Aufbereitungsvorrichtung eine Aufnahme (Röhre) aufweist, in welcher die thermische Aufbereitung erfolgt und somit das Hilfsmaterial und/oder das Wirbelschichtbasismaterial stark erhitzt werden. In einer weiteren Aufnahme (Röhre) der Aufbereitungsvorrichtung, in welche aufbereitetes Hilfsmaterial aus der ersten Aufnahme, beispielsweise mittels eines Überlaufs, geleitet wird, wird das aufbereitete Hilfsmaterial zum Kühlen desselben mit einem kalten Gasstrom fluidisiert. Der kalte Gasstrom nimmt dabei die Wärme des aufbereiteten Hilfsmaterials auf, so dass sich die zweite Aufnahme insgesamt auf eine Temperatur von beispielsweise ungefähr 350°C abkühlen kann. Die erwärmte Luft kann dann über eine Filtervorrichtung abgeführt werden, welche an die zweite Aufnahme angrenzt oder in der zweiten Aufnahme angeordnet ist. Die Temperatur der Luft liegt dabei vorzugsweise oberhalb der Kondensationstemperatur der darin enthaltenen organischen Stoffe. Damit lässt sich ein Kondensieren organischer Stoffe insbesondere an der Filtervorrichtung wirksam reduzieren oder vollständig vermeiden.

Günstig kann es sein, wenn durch das Aufwirbeln des mit Schadstoff beladenen Hilfsmaterials und/oder des Wirbelschichtbasismaterials in der thermischen Aufbereitungsvorrichtung eine blasenbildende Wirbelschicht ausgebildet wird. Hierdurch wird der Feststoffaustrag aus der Wirbelschicht minimiert. Vorzugsweise wird hierbei ein optimales Verhältnis von Luftsauerstoff zu zu verbrennendem Schadstoff gewählt.

Alternativ hierzu kann vorgesehen sein, dass durch das Aufwirbeln des mit Schadstoff beladenen Hilfsmaterials und/oder des Wirbelschichtbasismaterials eine zirkulierende Wirbelschicht ausgebildet wird. Günstig kann es sein, wenn die Aufbereitungsvorrichtung eine Aufnahme mit entgegen der Schwerkraftrichtung nach oben hin zunehmendem Querschnitt (aufgeweitetem "Freeboard") umfasst. Hierdurch können aus der Wirbelschicht ausgetragene kleine Teilchen aufgrund der Reduktion der Gasströmungsgeschwindigkeit verlangsamt werden, so dass sie in die Wirbelschicht zurückfallen können.

Bei einer weiteren Ausgestaltung der Erfindung kann vorgesehen sein, dass aufbereitetes Hilfsmaterial über eine Filtervorrichtung aus der Aufbereitungsvorrichtung ausgeschleust wird. Insbesondere kann hierzu die Ausbildung einer zirkulierenden Wirbelschicht vorgesehen sein. Die Filtervorrichtung, insbesondere ein Heißgasfilter, ist hierzu vorzugsweise außerhalb der vertikalen Projektion der Aufnahme, insbesondere der Wirbelschicht, angeordnet. Damit wird ein Abfallen, gegebenenfalls bei einer Abreinigung, von an der Filtervorrichtung abgeschiedenen Teilchen von der Filtervorrichtung zurück in die Wirbelschicht wirksam reduziert oder komplett vermieden. Stattdessen kann das Abfallen in einen unter der Filtervorrichtung angeordneten Behälter erfolgen. Vorzugsweise wird die Aufbereitungsvorrichtung hierbei so betrieben, dass die Teilchen eine lange Verweilzeit in der Aufbereitungsvorrichtung haben, um eine vollständige Umsetzung der organischen Bestandteile des Schadstoffs gewährleisten zu können.

Vorteilhaft kann es ferner sein, wenn die Aufbereitungsvorrichtung zwei Aufnahmen (wie vorstehend beschrieben) sowie eine Filtervorrichtung zum Ausschleusen des aufbereiteten Hilfsmaterials (wie vorstehend beschrieben) umfasst.

Die Aufbereitungsvorrichtung ist vorzugsweise in eine Reinigungsvorrichtung zum Reinigen eines mit Schadstoff beladenen Rohgasstroms, insbesondere eine Filtervorrichtung mit regenerierbaren Filtermodulen, integriert.

Hilfsmaterial wird vorzugsweise automatisch aus der Filtervorrichtung zum Reinigen des Rohgasstroms entfernt und der Aufbereitungsvorrichtung zugeführt.

Vorzugsweise ist eine, insbesondere automatische oder manuell betriebene, Puffervorrichtung vorgesehen, in welcher mit Schadstoff beladenes Hilfsmaterial aus der Filtervorrichtung zur Reinigung des Rohgasstroms zwischengespeichert werden kann. Aus der Puffervorrichtung wird das mit Schadstoff beladene Hilfsmaterial der Aufbereitungsvorrichtung zugeführt.

Die Puffervorrichtung umfasst insbesondere einen Pufferbehälter, welcher ein Speichervolumen von beispielsweise mindestens ungefähr einem Kubikmeter, insbesondere ungefähr 100 Kubikmeter aufweist.

Das Zuführen von mit Schadstoff beladenem Hilfsmaterial zu der Aufbereitungsvorrichtung erfolgt vorzugsweise über eine Kühlschnecke, welche auch als Schneckenwärmetauscher bezeichnet wird. Eine Kühlung des der Aufbereitungsvorrichtung zugeführten, mit Schadstoff beladenen Hilfsmaterials erfolgt vorzugsweise derart, dass die Temperatur bis zur Zuführung zu der Aufbereitungsvorrichtung höchstens ungefähr 120°C beträgt, um ein Auskondensieren von Teeren in der Zuführvorrichtung zu verhindern.

Alternativ hierzu kann eine Dickstromförderung erfolgen, wobei zum Unterbinden der Wärmeleitung eine Förderleitung vorzugsweise gekühlt wird. Erfolgt eine schnelle Förderung, kann vorzugsweise auf eine Kühlung des Hilfsmaterials verzichtet werden.

Ferner kann alternativ hierzu als Zuführvorrichtung eine Rieselvorrichtung und/oder eine Rüttelrinne vorgesehen sein.

Eine durchschnittliche Teilchengröße des Wirbelschichtbasismaterials beträgt vorzugsweise zwischen ungefähr 0,1 mm bis ungefähr 10 mm, insbesondere zwischen ungefähr 0,3 mm bis ungefähr 3 mm.

Der Median der Teilchengrößenverteilung des frischen und/oder aufbereiteten Hilfsmaterials beträgt vorzugsweise zwischen ungefähr 10 µm und ungefähr 50 µm, insbesondere zwischen ungefähr 15 µm und ungefähr 30 µm.

Der Median der Teilchengrößenverteilung des mit Schadstoff beladenen Hilfsmaterials liegt beispielsweise bei ungefähr 50 µm bis ungefähr 60 µm.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine Lackieranlage zum Lackieren von Werkstücken;
- Fig. 2: einen schematischen vertikalen Querschnitt durch eine erste Aus-führungsform einer Aufbereitungsanlage zur Aufbereitung von Hilfsmaterial;
- Fig. 3: eine der Fig. 2 entsprechende schematische Darstellung einer zweiten Ausführungsform einer Aufbereitungsanlage, bei welcher Abluft aus einer Aufbereitungsvorrichtung der Aufbereitungsanlage zum Auf-heizen von Zuluft für die Aufbereitungsvorrichtung verwendet wird;
- Fig. 4: eine der Fig. 2 entsprechende schematische Darstellung einer dritten Ausführungsform einer Aufbereitungsanlage, bei welcher eine thermische Nachverbrennungsvorrichtung vorgesehen ist;
- Fig. 5: eine der Fig. 2 entsprechende schematische Darstellung einer vierten Ausführungsform einer Aufbereitungsanlage, bei welcher mehrere Teilluftströme als gemischter Zuluftstrom für die Aufbereitungs-vorrichtung vorgesehen sind;
- Fig. 6: eine der Fig. 2 entsprechende schematische Darstellung einer fünften Ausführungsform einer Aufbereitungsanlage, bei welcher Zuluft an verschiedenen Stellen der Aufbereitungsvorrichtung zugeführt wird;
- Fig. 7: eine der Fig. 2 entsprechende schematische Darstellung einer sechsten Ausführungsform einer Aufbereitungsanlage, bei welcher eine Luftleitung für Zuluft innerhalb der Aufbereitungsvorrichtung verläuft;
- Fig. 8: einen schematischen vertikalen Querschnitt durch eine siebte Ausführungsform einer Aufbereitungsanlage, bei welcher eine thermische Nachverbrennungsvorrichtung sowie ein mit einem Bypass versehener Wärmetauscher zum Aufheizen von Zuluft für die Aufbereitungsvorrichtung der Aufbereitungsanlage vorgesehen sind;
- Fig. 9: eine der Fig. 8 entsprechende schematische Darstellung einer achten Ausführungsform einer Aufbereitungsanlage, welche mit einer Trocknungsvorrichtung zum Trocknen von Werkstücken gekoppelt ist;
- Fig. 10: eine der Fig. 8 entsprechende schematische Darstellung einer neunten Ausführungsform einer Aufbereitungsanlage, bei welcher eine elektrische Heizvorrichtung zum Aufheizen von Zuluft für die Aufbereitungsvorrichtung der Aufbereitungsanlage vorgesehen ist;
- Fig. 11: eine der Fig. 8 entsprechende schematische Darstellung einer zehnten Ausführungsform einer Aufbereitungsanlage, bei welcher ein Umluftkreislauf zum Betrieb der Aufbereitungsvorrichtung der Aufbereitungsanlage und einer Trocknungsvorrichtung zum Trocknen von Werkstücken vorgesehen ist;
- Fig. 12: eine der Fig. 8 entsprechende schematische Darstellung einer elften Ausführungsform einer Aufbereitungsanlage, bei welcher eine elektrische Heizvorrichtung und ein Wärmetauscher vorgesehen sind;
- Fig. 13: eine der Fig. 8 entsprechende schematische Darstellung einer zwölften Ausführungsform einer Aufbereitungsanlage, bei welcher eine Messvorrichtung zum Ermitteln von Gaskonzentrationen in der Aufbereitungsvorrichtung der Aufbereitungsanlage vorgesehen ist;
- Fig. 14: eine schematische Darstellung einer Aufbereitungsvorrichtung einer Aufbereitungsanlage, in welcher eine blasenbildende Wirbelschicht ausgebildet ist;
- Fig. 15: eine schematische Darstellung einer Aufbereitungsvorrichtung einer Aufbereitungsanlage, in welcher eine zirkulierende Wirbelschicht ausgebildet ist;
- Fig. 16: eine der Fig. 8 entsprechende schematische Darstellung einer dreizehnten Ausführungsform einer Aufbereitungsanlage, bei welcher ein Ausschleusen von aufbereitetem Hilfsmaterial mittels einer Filtervorrichtung erfolgt; und
- Fig. 17: eine schematische Darstellung einer vierzehnten Ausführungsform einer Aufbereitungsanlage, welche Puffervorrichtungen zum Zwischenspeichern von mit Schadstoff beladenem Hilfsmaterial und von aufbereitetem Hilfsmaterial umfasst.

Gleiche oder funktional äquivalente Elemente sind in sämtlichen Figuren mit denselben Bezugszeichen versehen.

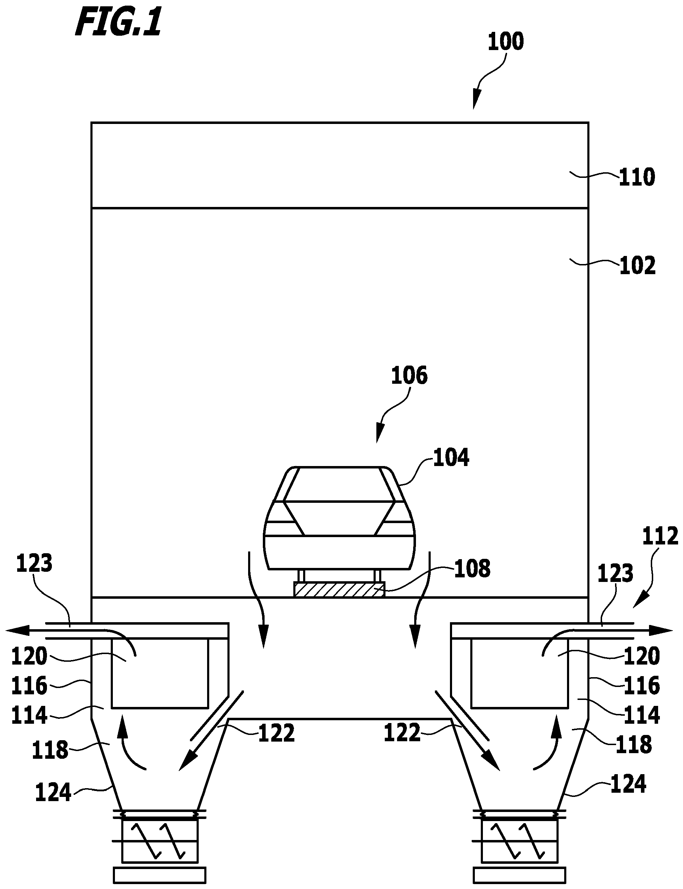

Eine in Fig. 1 dargestellte, als Ganzes mit 100 bezeichnete Lackieranlage umfasst eine als Lackierkabine ausgebildete Lackiervorrichtung 102, in welcher Werkstücke 104, beispielsweise Fahrzeugkarosserien, mit Lack beaufschlagbar (lackierbar) sind.

Die Werkstücke 104 sind hierzu mittels einer Werkstückfördervorrichtung 108 einem Applizierbereich 106 der Lackiervorrichtung 102 zuführbar und aus dem Applizierbereich 106 wieder entfernbar.

Die Lackieranlage 100 umfasst ferner ein über der Lackiervorrichtung 102 angeordnetes Plenum 110, mittels welchem dem Applizierbereich 106 Luft zuführbar ist.

Ferner umfasst die Lackieranlage 100 eine unter der Lackiervorrichtung 102 angeordnete Filteranlage 112, mittels welcher die durch den Applizierbereich 106 geführte Luft, welche durch das Applizieren von Lack auf die Werkstücke 104 als Lack-Overspray ausgebildeten Schadstoff aufgenommen hat, gereinigt werden kann.

Die Filteranlage 112 umfasst mehrere Filtervorrichtungen 114.

Jede Filtervorrichtung 114 umfasst eine Einhausung 116, welche eine Rohgaskammer 118 begrenzt und in welcher mindestens ein Filterelement 120 angeordnet ist.

Ferner umfasst die Filtervorrichtung 114 einen Einlasskanal 122, durch welchen ein Rohgasstrom, welcher durch die durch den Applizierbereich 106 geführte, mit Schadstoff beaufschlagte Luft gebildet ist, in die Rohgaskammer 118 der Filtervorrichtung 114 einströmen kann.

Die Filtervorrichtung 114 ist als eine Trockenfiltervorrichtung ausgebildet, d.h., dass eine Reinigung des Rohgasstroms im Wesentlichen ohne die Zugabe einer Flüssigkeit an den Filterelementen 120 erfolgt. Vielmehr kann dem Rohgasstrom ein Hilfsmaterial, insbesondere Filterhilfsmaterial, zugeführt werden, welches vorzugsweise einen Flüssigkeitsanteil in dem Schadstoff aufnimmt und zusammen mit dem Schadstoff als mit Schadstoff beladenes Hilfsmaterial an dem Filterelement 120 abgeschieden werden kann. Das Hilfsmaterial bildet zusammen mit dem Schadstoff ein stabiles System aus Schadstoff und Hilfsmaterial.

Durch die Reinigung des Rohgasstroms wird ein Reingasstrom erhalten, welcher die Filtervorrichtung 114 durch eine Reingasleitung 123 verlässt.

Durch ein Abscheiden des Schadstoffs zusammen mit dem Hilfsmaterial an dem Filterelement 120 wird eine Sperrschicht oder eine Schutzschicht gebildet, welche einfach von dem Filterelement 120 abgereinigt werden kann.

Die Filtervorrichtung 114 ist somit eine regenerierbare Filtervorrichtung 114, welche ohne einen Austausch von Filterelementen 120 regeneriert und erneut verwendet werden kann.

Das von dem Filterelement 120 abgereinigte, mit Schadstoff beladene Hilfsmaterial kann in einem Aufnahmebehälter 124 der Filtervorrichtung 114, welche unter dem Filterelement 120 angeordnet ist, aufgenommen werden.

Nach einer gewissen Betriebsdauer der Filtervorrichtung 114 ist das Hilfsmaterial zu stark mit Schadstoff beladen, um noch eine zuverlässige Reinigung des Rohgasstroms und einen sicheren Schutz des Filterelements 120 zu ermöglichen. Das mit Schadstoff beladene Hilfsmaterial muss folglich regelmäßig aufbereitet und/oder durch frisches Hilfsmaterial ausgetauscht werden.

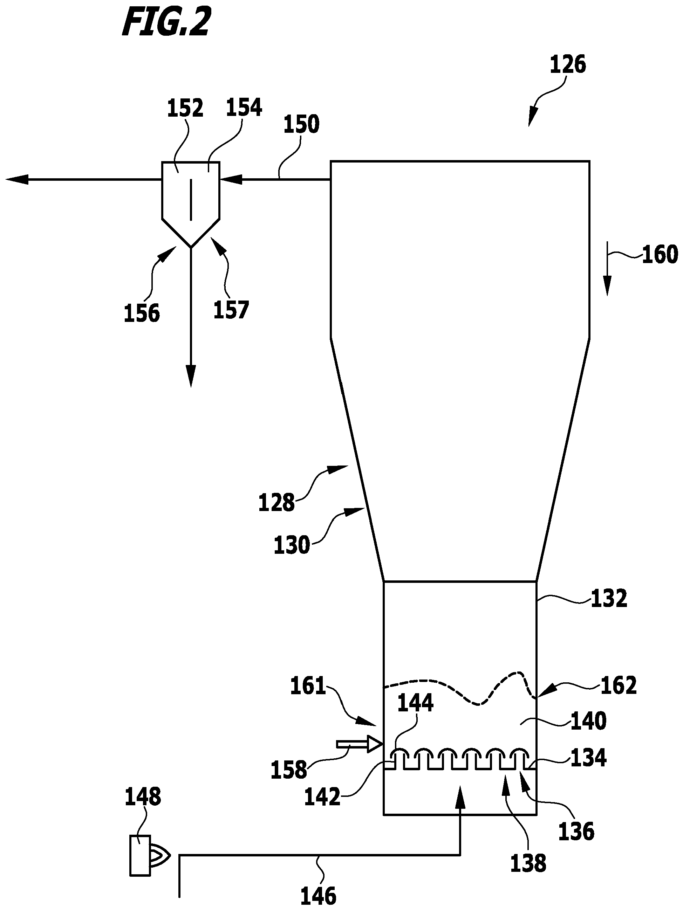

Zur Aufbereitung des Hilfsmaterials umfasst die Lackieranlage 100 eine thermische Aufbereitungsanlage 126 (siehe Fig. 2).

Bei der in Fig. 2 dargestellten ersten Ausführungsform der thermischen Aufbereitungsanlage 126 ist vorgesehen, dass die Aufbereitungsanlage 126 eine Aufbereitungsvorrichtung 128 umfasst, welche insbesondere als ein Wirbelschichtofen 130 ausgebildet ist.

Die Aufbereitungsvorrichtung 128 umfasst eine Aufnahme 132 zur Aufnahme von Wirbelschichtbasismaterial und Hilfsmaterial, insbesondere mit Schadstoff beladenem Hilfsmaterial.

Auf die Verwendung von Wirbelschichtbasismaterial kann bei einer weiteren Ausführungsform aber auch verzichtet werden.

Die Verwendung von Wirbelschichtbasismaterial kann vorteilhaft sein, wenn ein Hilfsmaterial aufbereitet werden soll, das beispielsweise aufgrund von Bindungskräften zwischen den Teilchen des Hilfsmaterials und/oder aufgrund der Teilchengröße für sich allein genommen nicht aufgewirbelt werden kann.

Eine Boden 134 der Aufnahme 132 ist beispielsweise als ein Düsenboden 136, insbesondere als ein Glockenboden 138, ausgebildet und ermöglicht die Zuführung von Zuluft durch den Boden 134 zu dem Wirbelschichtbasismaterial und dem Hilfsmaterial, insbesondere dem System aus Schadstoff und Hilfsmaterial, in der Aufnahme 132.

Durch die Zuführung von Zuluft durch den Boden 134 der Aufnahme 132 kann eine Wirbelschicht 140 aus Wirbelschichtbasismaterial und/oder aus dem System aus Schadstoff und Hilfsmaterial in der Aufnahme 132 ausgebildet werden.

Der Glockenboden 138 der Aufnahme 132 umfasst eine Vielzahl von Düsen 142, welche beispielsweise glockenartig mit Abdeckungen 144 versehen sind.

Mittels einer Zuluftleitung 146 der Aufbereitungsanlage 126 kann der Aufnahme 132 der Aufbereitungsvorrichtung 128 Zuluft zugeführt werden.

Ferner umfasst die Aufbereitungsanlage 126 eine Heizvorrichtung 148, insbesondere einen Brenner, welche zum Aufheizen der Zuluft dient.

Die mittels der Heizvorrichtung 148 aufzuheizende und der Aufnahme 132 der Aufbereitungsvorrichtung 128 zuzuführende Zuluft ist bei der in Fig. 2 dargestellten ersten Ausführungsform der Aufbereitungsanlage 126 Umgebungsluft aus der Umgebung der Aufbereitungsanlage 126, insbesondere Raumluft.

Mittels einer Abluftleitung 150 der Aufbereitungsanlage 126 kann der Gasstrom, insbesondere der Trägergasstrom, welcher als Zuluft mittels der Zuluftleitung 146 der Aufnahme 132 der Aufbereitungsvorrichtung 128 zuführbar und durch das Wirbelschichtbasismaterial und das mit Schadstoff beladene Hilfsmaterial hindurchführbar ist, aus der Aufnahme 132 der Aufbereitungsvorrichtung 128 abgeführt werden.

Die Aufbereitungsanlage 126 umfasst eine Abscheidevorrichtung 152, beispielsweise eine Filtervorrichtung 154. Hiermit kann verhindert werden, dass unerwünschte Verunreinigungen der Abluft, d.h. des durch die Wirbelschicht 140 geführten Gasstroms, an die Umgebung der Aufbereitungsanlage 126 abgegeben werden.

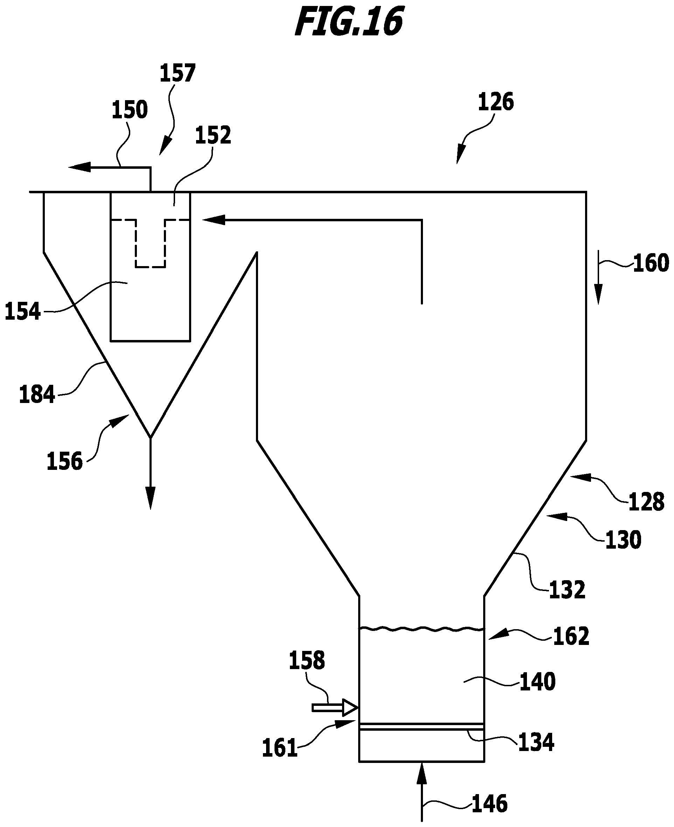

Ferner kann mittels der Abscheidevorrichtung 152, insbesondere mittels der Filtervorrichtung 154, aufbereitetes Hilfsmaterial aus der Aufnahme 132 der Aufbereitungsvorrichtung 128 ausgeschleust werden (siehe hierzu auch Fig. 16).

Die Abscheidevorrichtung 152 kann somit auch als Abführvorrichtung 156 zum Abführen von aufbereitetem Hilfsmaterial aus der Aufbereitungsvorrichtung 128 dienen. Insbesondere ist die Abscheidevorrichtung 152 Bestandteil einer Abtrennungsvorrichtung 157 zum Abtrennen von aufbereitetem Hilfsmaterial von dem mit Schadstoff beladenen Hilfsmaterial.

Die Aufbereitungsanlage 126 umfasst ferner eine Zuführvorrichtung 158, mittels welcher der Aufnahme 132 der Aufbereitungsvorrichtung 128 mit Schadstoff beladenes Hilfsmaterial zuführbar ist. Insbesondere kann das mit Schadstoff beladene Hilfsmaterial in einem bezüglich einer Schwerkraftrichtung 160 unteren Bereich 161 der Aufnahme 132 derselben zugeführt werden.

Die vorstehend beschriebene erste Ausführungsform der Aufbereitungsanlage 126 funktioniert wie folgt:
Über die Zuluftleitung 146 wird Luft aus der Umgebung der Aufbereitungsanlage 126 angesaugt und als Zuluft der Aufnahme 132 der Aufbereitungsvorrichtung 128 zugeführt.

Die Zuluft wird dabei mittels der Heizvorrichtung 148 über die Temperatur bei Normalbedingungen (ca. 20 °C bis 30 °C) erhitzt, insbesondere auf eine Temperatur von ungefähr 550 °C.

Die Zuluft wird als Gasstrom, insbesondere Trägergasstrom, durch den Boden 134 der Aufnahme 132 geführt, wirbelt das in der Aufnahme 132 angeordnete Wirbelschichtbasismaterial auf und erhitzt das Wirbelschichtbasismaterial. Hierdurch wird eine heiße Wirbelschicht 140 in der Aufnahme 132 der Aufbereitungsvorrichtung 128 ausgebildet.

Mittels der Zuführvorrichtung 158 wird dem Wirbelschichtbasismaterial mit Schadstoff beladenes Hilfsmaterial, beispielsweise aus den Filtervorrichtungen 114 der Filteranlage 112 der Lackieranlage 100, zugeführt.

Das mit Schadstoff beladene Hilfsmaterial wird sodann in der Aufbereitungsvorrichtung 128 erhitzt und dabei aufbereitet.

Die Aufbereitungsvorrichtung 128 ist somit eine thermische Aufbereitungsvorrichtung 128.

Die Aufbereitungsanlage 126 ist somit eine thermische Aufbereitungsanlage 126.

Durch das Erhitzen des mit Schadstoff beladenen Hilfsmaterials wird der Schadstoff zumindest teilweise chemisch umgewandelt, insbesondere verbrannt, oder zumindest die Klebrigkeit des Schadstoffs reduziert, so dass Agglomerate aus Teilchen aus Schadstoff und Teilchen aus Hilfsmaterial aufgebrochen werden. Teilchen aus Hilfsmaterial bleiben dabei vorzugsweise chemisch unverändert.

Insbesondere wird durch das Erhitzen des mit Schadstoff beladenen Hilfsmaterials ein organischer Bestandteil des Schadstoffs verdampft, vorzugsweise verbrannt, und aus dem System aus Schadstoff und Hilfsmaterial entfernt.

Die von Schadstoff befreiten Teilchen aus Hilfsmaterial sammeln sich aufgrund der geringeren Masse und/oder Größe in einem bezüglich der Schwerkraftrichtung 160 oberen Bereich 162 der Wirbelschicht 140 und können dort von dem durchströmenden Gasstrom mitgerissen und schließlich an der Abscheidevorrichtung 152 abgeschieden werden. Mittels der Abführvorrichtung 156 werden diese Teilchen als aufbereitetes Hilfsmaterial aus der Aufbereitungsvorrichtung 128 entfernt und können in der Filteranlage 112, insbesondere in den Filtervorrichtungen 114 der Filteranlage 112, zur Reinigung eines Rohgasstroms wiederverwendet werden.

Als Hilfsmaterial kommt dabei insbesondere Kalksteinmehl in Betracht.

Auch das Wirbelschichtbasismaterial ist vorzugsweise Kalksteinmehl, weist jedoch vorzugsweise Teilchen mit größerem Teilchendurchmesser auf. Beispielsweise sind die Teilchen des Wirbelschichtbasismaterials durchschnittlich mindestens ungefähr 10 mal, beispielsweise ungefähr 50 mal, so groß wie die Teilchen des Hilfsmaterials.

Im Betrieb der Aufbereitungsanlage 126 wird das Wirbelschichtbasismaterial nach und nach durch Abrieb zerkleinert, so dass Teilchen aus Wirbelschichtbasismaterial gebildet werden, welche eine ähnliche Größe aufweisen, wie die Teilchen des Hilfsmaterials. Da das Wirbelschichtbasismaterial vorzugsweise eine chemische Zusammensetzung aufweist, welche der chemischen Zusammensetzung eines als Hilfsmaterial verwendbaren Materials entspricht, können auch die kleinen Teilchen aus Wirbelschichtbasismaterial mittels der Abführvorrichtung 156 aus der Aufbereitungsvorrichtung 128 abgeführt und als aufbereitetes Hilfsmaterial in der Filteranlage 112 zum Reinigen eines Rohgasstroms verwendet werden.

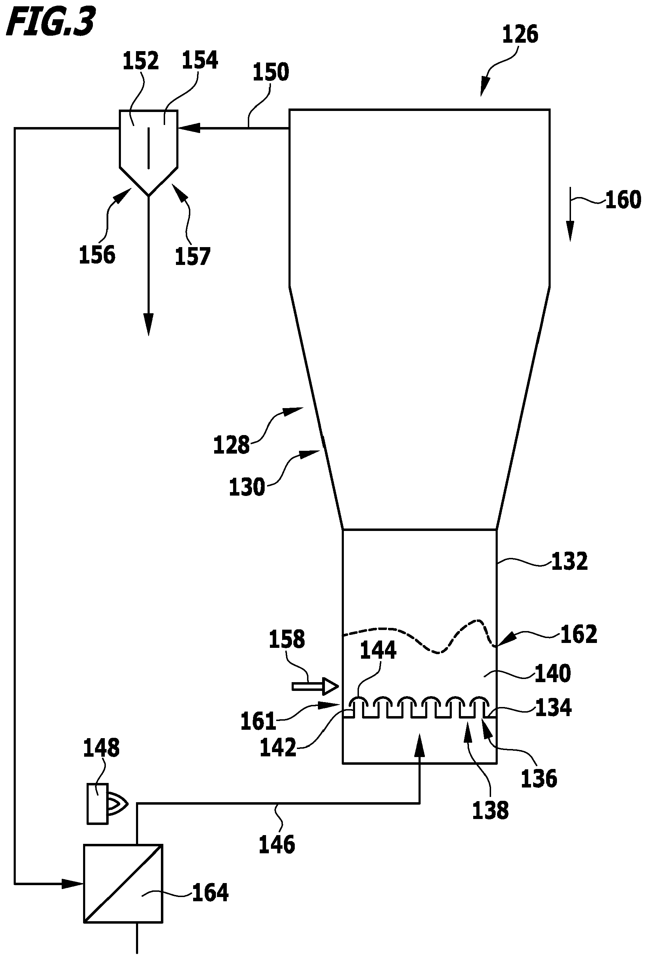

Eine in Fig. 3 dargestellte zweite Ausführungsform einer thermischen Aufbereitungsanlage 126 unterscheidet sich von der in Fig. 2 dargestellten ersten Ausführungsform im Wesentlichen dadurch, dass die durch die Abscheidevorrichtung 152 geführte Abluft nicht ungenutzt an die Umgebung abgegeben wird. Vielmehr ist ein Wärmetauscher 164 vorgesehen, mittels welchem die in der Abluft aus der Aufbereitungsvorrichtung 128 enthaltene Wärme zumindest teilweise auf die der Aufbereitungsvorrichtung 128 zuzuführende Zuluft übertragbar ist. Hierdurch kann ein Brennstoffbedarf der Heizvorrichtung 148 vorzugsweise reduziert werden.

Im Übrigen stimmt die in Fig. 3 dargestellte zweite Ausführungsform einer Aufbereitungsanlage 126 hinsichtlich Aufbau und Funktion mit der in Fig. 2 dargestellten ersten Ausführungsform überein, so dass auf deren vorstehende Beschreibung insoweit Bezug genommen wird.

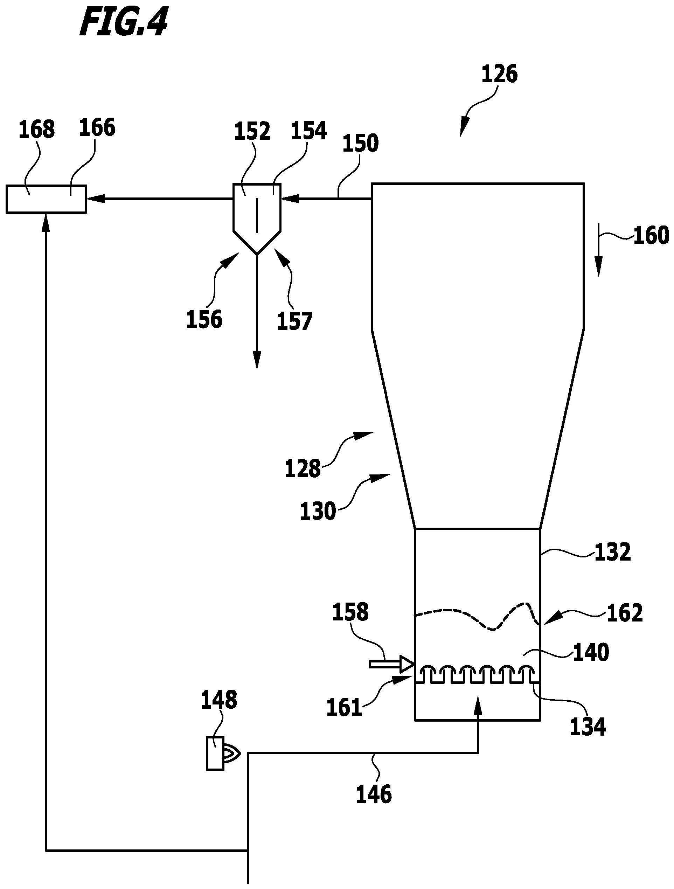

Eine in Fig. 4 dargestellte dritte Ausführungsform einer thermischen Aufbereitungsanlage 126 unterscheidet sich von der in Fig. 2 dargestellten ersten Ausführungsform im Wesentlichen dadurch, dass als Zuluft für die Aufbereitungsvorrichtung 128 Abluft aus einer (noch zu beschreibenden) Trocknungsvorrichtung zum Trocknen von Werkstücken 104, insbesondere Fahrzeugkarosserien, verwendet wird.

Ferner ist bei der in Fig. 4 dargestellten dritten Ausführungsform der Aufbereitungsanlage 126 eine Verbrennungsvorrichtung 166, insbesondere eine thermische Nachverbrennungsvorrichtung 168, vorgesehen.

Die Abluft aus der Trocknervorrichtung wird dabei teilweise der Aufbereitungsvorrichtung 128 und teilweise direkt der thermischen Nachverbrennungsvorrichtung 168 zugeführt.

Die Abluft aus der Aufbereitungsvorrichtung 128 wird bei der in Fig. 4 dargestellten dritten Ausführungsform der Aufbereitungsanlage 126 mittels der Abluftleitung 150 nach Durchströmen der Abscheidevorrichtung 152 ebenfalls der thermischen Nachverbrennungsvorrichtung 168 zugeführt.

Durch die Verwendung von Abluft aus der Trocknungsvorrichtung als Zuluft für die Aufbereitungsvorrichtung 128 kann der Brennstoffbedarf der Heizvorrichtung 148 reduziert werden. Dies liegt einerseits daran, dass die Abluft der Trocknungsvorrichtung bereits eine erhöhte Temperatur aufweist. Andererseits enthält Abluft aus der Trocknungsvorrichtung zumeist brennbare Lösemittel, welche bei deren Verbrennung in der Aufbereitungsvorrichtung 128 ebenfalls zur Temperaturerhöhung unter Vermeidung einer Zuheizung mittels der Heizvorrichtung 148 beitragen.

Die thermische Nachverbrennungsvorrichtung 168 dient der Beseitigung sämtlicher organischer und weiterer möglicherweise gesundheitsgefährdender Stoffe aus der Abluft der Trocknungsvorrichtung und der Abluft der Aufbereitungsvorrichtung 128. Insbesondere kann mittels der thermischen Nachverbrennungsvorrichtung 168 eine sehr hohe Temperatur zur chemischen Umsetzung der unerwünschten Stoffe verwendet werden.

Alternativ oder ergänzend zur Beseitigung organischer Stoffe aus der Abluft, insbesondere aus der Abluft der Aufbereitungsvorrichtung, mittels thermischer Nachverbrennung kann ein Kondensatabscheider eingesetzt werden. Hierbei wird mittels eines Wärmetauschers die Temperatur des Luftstroms unter den Taupunkt der abzuscheidenden organischen Stoffe abgekühlt. Die kondensierten Stoffe werden in einem Sammelbehälter aufgenommen.

Im Übrigen stimmt die in Fig. 4 dargestellte dritte Ausführungsform der Aufbereitungsanlage 126 mit der in Fig. 2 dargestellten ersten Ausführungsform überein, so dass auf deren vorstehende Beschreibung insoweit Bezug genommen wird.

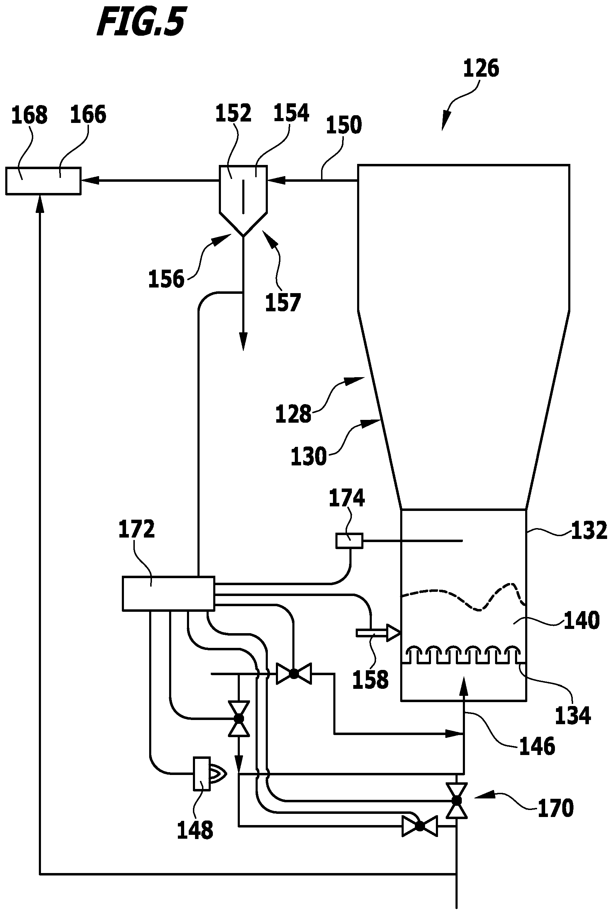

Eine in Fig. 5 dargestellte vierte Ausführungsform einer thermischen Aufbereitungsanlage 126 unterscheidet sich von der in Fig. 4 dargestellten dritten Ausführungsform im Wesentlichen dadurch, dass die Aufbereitungsanlage 126 eine Ventilanordnung 170 umfasst, mittels welcher die Zuluft für die Aufbereitungsvorrichtung 128 wahlweise aus verschiedenen Quellen, insbesondere aus Umgebungsluft, beispielsweise Raumluft, oder Abluft einer Trocknungsvorrichtung, bereitgestellt werden kann.

Ferner kann mittels der Ventilanordnung 170 die bereitgestellte Luft wahlweise der Heizvorrichtung 148 zugeführt und erhitzt oder an der Heizvorrichtung 148 vorbeigeführt werden.

Mittels einer Steuervorrichtung 172 der Aufbereitungsanlage 126 kann die Ventilanordnung 170 insbesondere so gesteuert und/oder geregelt werden, dass eine Temperatur in der Aufnahme 132 der Aufbereitungsvorrichtung 128 im Wesentlichen konstant ist.

Zur Überprüfung der Temperatur in der Aufnahme 132 der Aufbereitungsvorrichtung 128 ist eine Messvorrichtung 174 vorgesehen.

Vorzugsweise können auch die Zuführvorrichtung 158 und die Abführvorrichtung 156 mittels der Steuervorrichtung 172 gesteuert und/oder geregelt werden.

Im Übrigen stimmt die in Fig. 5 dargestellte vierte Ausführungsform einer Aufbereitungsanlage 126 hinsichtlich Aufbau und Funktion mit der in Fig. 4 dargestellten dritten Ausführungsform überein, so dass auf deren vorstehende Beschreibung insoweit Bezug genommen wird.

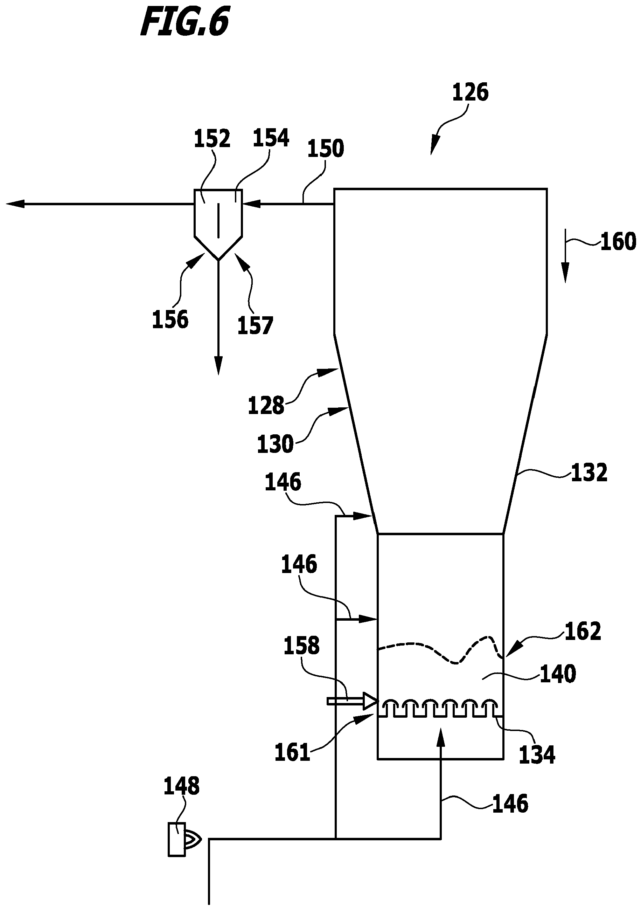

Eine in Fig. 6 dargestellte fünfte Ausführungsform einer thermischen Aufbereitungsanlage 126 unterscheidet sich von der in Fig. 2 dargestellten ersten Ausführungsform im Wesentlichen dadurch, dass die Zuluft für die Aufbereitungsvorrichtung 128 an verschiedenen Stellen in die Aufnahme 132 der Aufbereitungsvorrichtung 128 eingebracht wird.

Einerseits wird die Zuluft über den Boden 134 der Aufnahme 132 eingebracht, um eine Aufwirbelung des Wirbelschichtbasismaterials und des mit Schadstoff beladenen Hilfsmaterials zu ermöglichen.

Ferner wird Zuluft an verschiedenen Stellen oberhalb der Wirbelschicht 140 eingebracht, um eine Aufwirbelung und/oder ein Abführen von aufgewirbeltem aufbereiteten Hilfsmaterial gezielt beeinflussen zu können.

Im Übrigen stimmt die in Fig. 6 dargestellte fünfte Ausführungsform einer Aufbereitungsanlage 126 hinsichtlich Aufbau und Funktion mit der in Fig. 5 dargestellten vierten Ausführungsform überein, so dass auf deren vorstehende Beschreibung insoweit Bezug genommen wird.

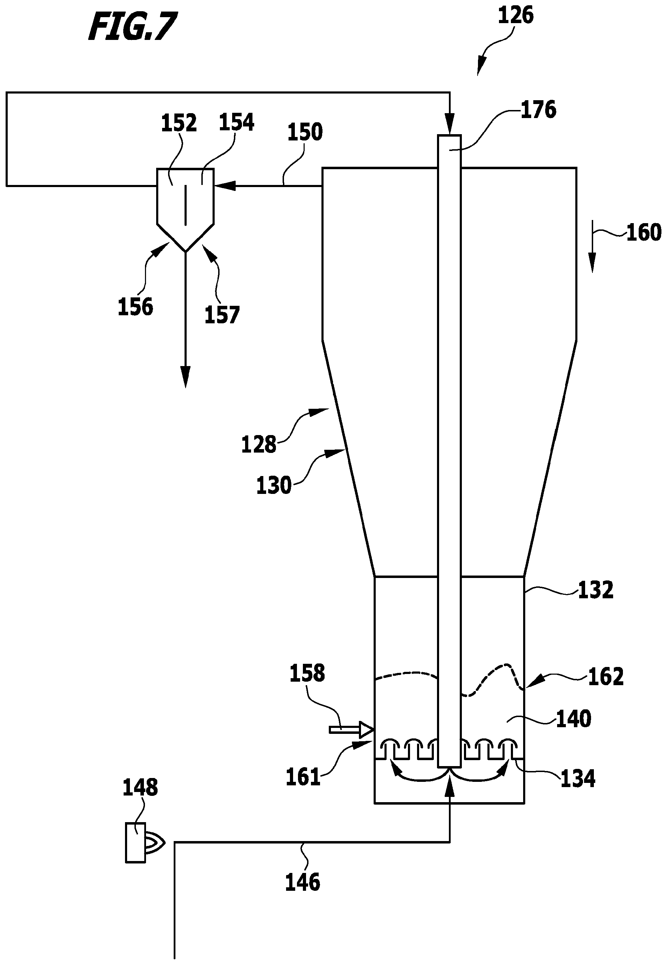

Eine in Fig. 7 dargestellte sechste Ausführungsform einer thermischen Aufbereitungsanlage 126 unterscheidet sich von der in Fig. 2 dargestellten ersten Ausführungsform im Wesentlichen dadurch, dass die Aufbereitungsvorrichtung 128 eine Luftleitung 176 umfasst, welche im Wesentlichen vertikal ausgerichtet ist, mittig in der Aufnahme 132 der Aufbereitungsvorrichtung 128 angeordnet ist und sich im Wesentlichen über die gesamte Länge der Aufnahme 132 der Aufbereitungsvorrichtung 128 erstreckt.

Die Luftleitung 176 ermöglicht die Zuführung von Luft zu dem Boden 134 der Aufnahme 132, wobei die Luft in der Schwerkraftrichtung 160 von oben durch die Aufnahme 132 der Aufbereitungsvorrichtung 128 geführt wird und somit im Betrieb der Aufbereitungsvorrichtung 128 automatisch erhitzt wird.

Hierdurch kann die in der Aufbereitungsvorrichtung 128 entstehende und/oder vorhandene Wärme effizient genutzt werden, um die Notwendigkeit für eine Zuheizung zu minimieren.

Im Übrigen stimmt die in Fig. 7 dargestellte sechste Ausführungsform einer Aufbereitungsanlage 126 mit der in Fig. 2 dargestellten ersten Ausführungsform überein, so dass auf deren vorstehende Beschreibung insoweit Bezug genommen wird.

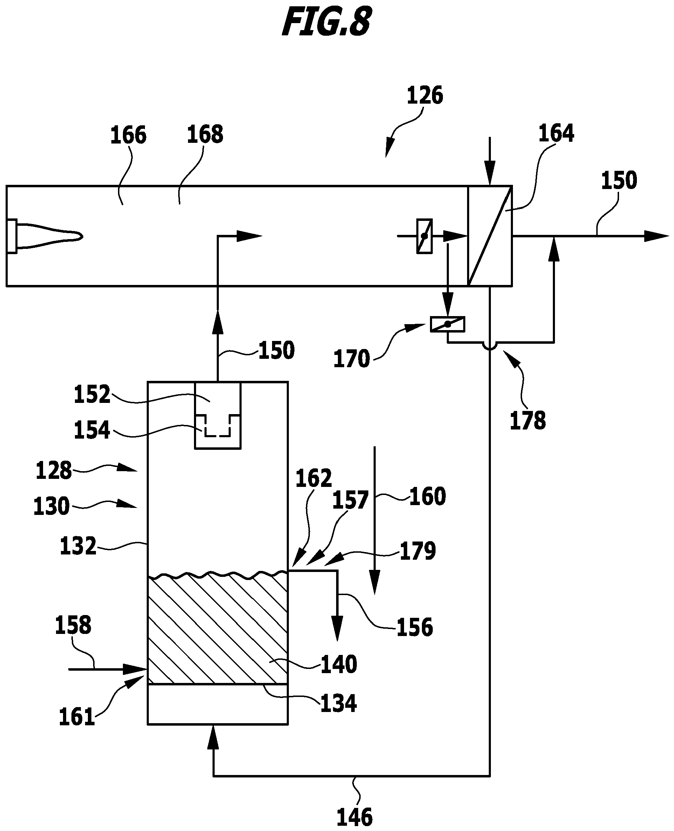

Eine in Fig. 8 dargestellte siebte Ausführungsform einer thermischen Aufbereitungsanlage 126 unterscheidet sich von der in Fig. 2 dargestellten ersten Ausführungsform im Wesentlichen dadurch, dass die Aufbereitungsanlage 126 eine thermische Nachverbrennungsvorrichtung 168 umfasst (siehe auch die dritte und vierte Ausführungsform gemäß den Fig. 4 und 5).

Die Abluft aus der Aufbereitungsvorrichtung 128 wird dabei der thermischen Nachverbrennungsvorrichtung 168 zugeführt und darin stark erhitzt.

Sowohl die erhitzte Abluft aus der thermischen Nachverbrennungsvorrichtung 168 als auch die Zuluft für die Aufbereitungsvorrichtung 128 werden einem Wärmetauscher 164 zugeführt, um die Wärme aus der erhitzten Abluft auf die aufzuheizende Zuluft zu übertragen.

Um ein Überhitzen der Zuluft und/oder der Aufnahmevorrichtung 128 zu verhindern, kann die erhitzte Abluft teilweise oder vollständig mittels eines Bypasses 178 an dem Wärmetauscher 164 vorbeigeführt werden.

Zum Einstellen eines Anteils der durch den Wärmetauscher 164 geführten Abluft und eines Anteils der mittels des Bypasses 178 an dem Wärmetauscher 164 vorbeigeführten Abluft ist bei der in Fig. 8 dargestellten siebten Ausführungsform der Aufbereitungsanlage 126 eine Ventilanordnung 170 vorgesehen. Die Ventilanordnung 170 ist beispielsweise mittels der Steuervorrichtung 172 steuerbar (siehe insbesondere die vierte Ausführungsform gemäß Fig. 5).

Zum Abtrennen des aufbereiteten Hilfsmaterials von dem mit Schadstoff beladenen Hilfsmaterial kann eine als Überlaufvorrichtung 179 ausgebildete Abtrennvorrichtung 157 vorgesehen sein. Mittels dieser Überlaufvorrichtung 179, welche vorzugsweise im oberen Bereich 162 der Wirbelschicht 140 angeordnet ist, kann sich in dem oberen Bereich 162 ansammelndes aufbereitetes Hilfsmaterial von dem sich insbesondere im unteren Bereich 161 ansammelnden mit Schadstoff beladenen Hilfsmaterial abgetrennt werden.

Im Übrigen stimmt die in Fig. 8 dargestellte siebte Ausführungsform der Aufbereitungsanlage 126 hinsichtlich Aufbau und Funktion mit der in Fig. 2 dargestellten ersten Ausführungsform überein, so dass auf deren vorstehende Beschreibung insoweit Bezug genommen wird.

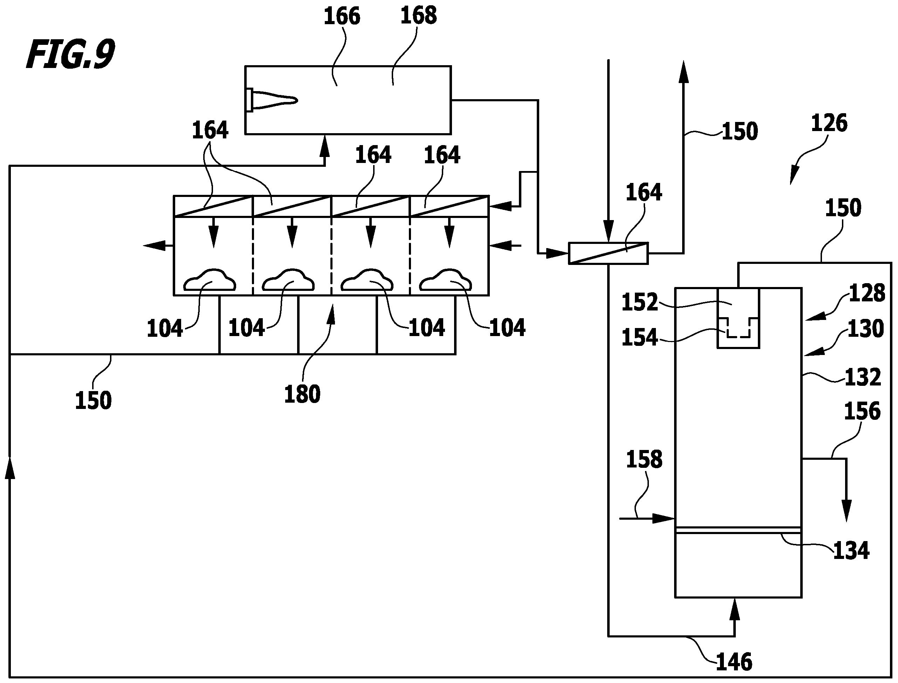

Eine in Fig. 9 dargestellte achte Ausführungsform einer thermischen Aufbereitungsanlage 126 unterscheidet sich von der in Fig. 8 dargestellten siebten Ausführungsform im Wesentlichen dadurch, dass die Luftführung (Zu- und Abluft) der Aufbereitungsvorrichtung 128 samt dem Wärmetauscher 164 in die Luftführung (Zu- und Abluft) einer Trocknungsvorrichtung 180 zur Trocknung von Werkstücken 104, insbesondere Fahrzeugkarosserien, und einer zugehörigen thermischen Nachverbrennungsvorrichtung 168 integriert ist.

Entsprechend der in Fig. 8 dargestellten siebten Ausführungsform wird auch bei der in Fig. 9 dargestellten achten Ausführungsform die Zuluft für die Aufbereitungsvorrichtung 128 mittels eines Wärmetauschers 164 erhitzt, welchem die in der thermischen Nachverbrennungsvorrichtung 168 erhitzte Abluft der Aufbereitungsvorrichtung 128 zugeführt wird.

Zusätzlich ist bei der in Fig. 8 dargestellten neunten Ausführungsform vorgesehen, dass die Wärme aus der Abluft der thermischen Nachverbrennungsvorrichtung 168 mittels weiterer Wärmetauscher 164 auf die Zuluft für die Trocknungsvorrichtung 180 übertragen wird.

Die Abluft aus der Trocknungsvorrichtung 180 wird ebenso wie die Abluft aus der Aufbereitungsvorrichtung 128 der thermischen Nachverbrennungsvorrichtung 168 zugeführt.

Im Übrigen stimmt die in Fig. 9 dargestellte achte Ausführungsform einer Aufbereitungsanlage 126 hinsichtlich Aufbau und Funktion mit der in Fig. 8 dargestellten siebten Ausführungsform überein, so dass auf deren vorstehende Beschreibung insoweit Bezug genommen wird.

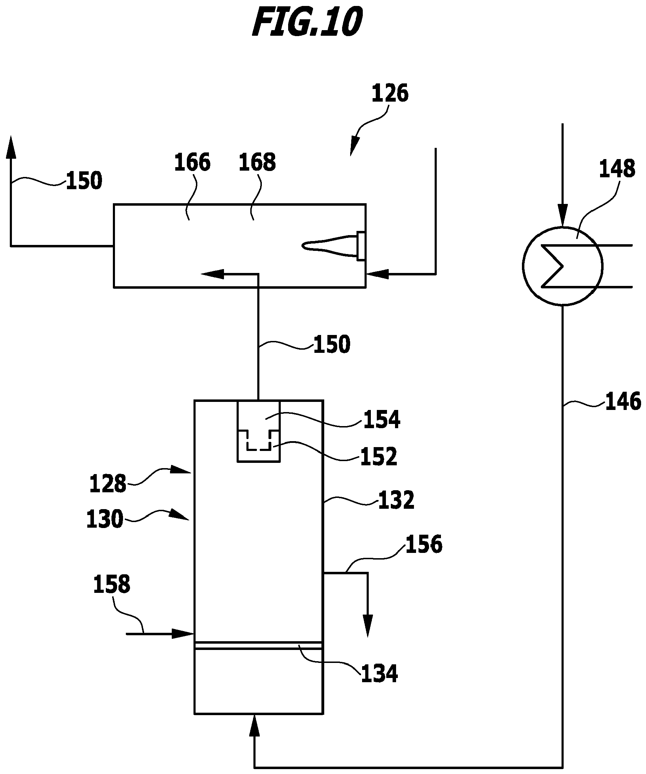

Eine in Fig. 10 dargestellte neunte Ausführungsform einer thermischen Aufbereitungsanlage 126 unterscheidet sich von der in Fig. 2 dargestellten ersten Ausführungsform im Wesentlichen dadurch, dass die Heizvorrichtung 148 als eine elektrische Heizvorrichtung 148, insbesondere als ein elektrisches Heizaggregat, ausgebildet ist.

Die Zuluft für die Aufbereitungsvorrichtung 128 wird somit mittels einer elektrischen Heizvorrichtung 148 erhitzt.

Die Abluft aus der Aufbereitungsvorrichtung 128 wird einer thermischen Nachverbrennungsvorrichtung 168 zugeführt, dadurch von unerwünschten Schadstoffen befreit und schließlich an die Umgebung abgegeben.

Im Übrigen stimmt die in Fig. 10 dargestellte neunte Ausführungsform einer Aufbereitungsanlage 126 hinsichtlich Aufbau und Funktion mit der in Fig. 2 dargestellten ersten Ausführungsform überein, so dass auf deren vorstehende Beschreibung insoweit Bezug genommen wird.

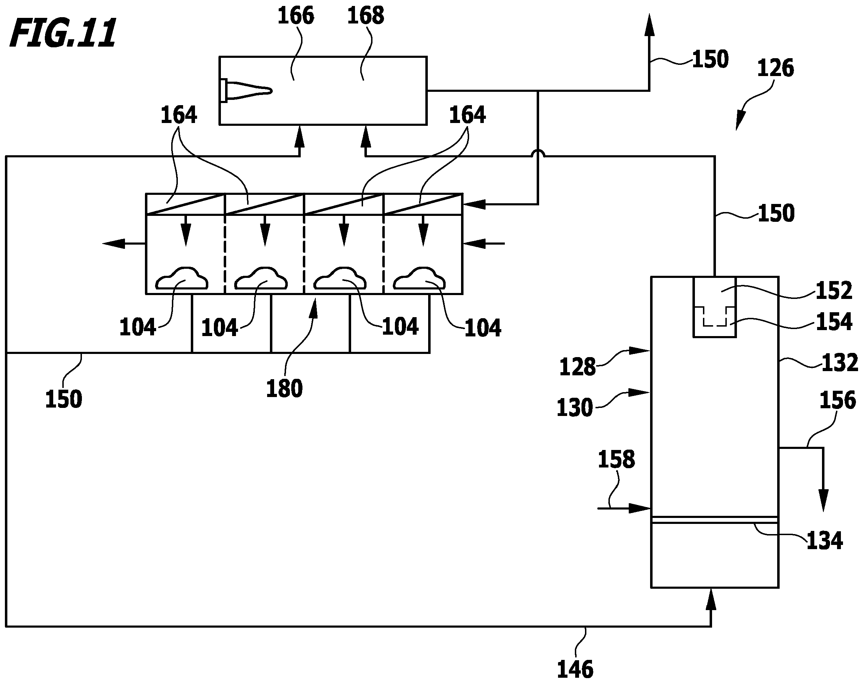

Eine in Fig. 11 dargestellte zehnte Ausführungsform einer thermischen Aufbereitungsanlage 126 unterscheidet sich von der in Fig. 9 dargestellten achten Ausführungsform im Wesentlichen dadurch, dass die Zuluft für die Aufbereitungsvorrichtung 128 ein Teil der Abluft aus der Trocknungsvorrichtung 180 ist.

Der übrige Teil der Abluft aus der Trocknungsvorrichtung 180 wird der thermischen Nachverbrennungsvorrichtung 168 zugeführt.

Ebenso wird die Abluft aus der Aufbereitungsvorrichtung 128 der thermischen Nachverbrennungsvorrichtung 168 zugeführt.

Im Übrigen stimmt die in Fig. 11 dargestellte zehnte Ausführungsform einer Aufbereitungsanlage 126 hinsichtlich Aufbau und Funktion mit der in Fig. 9 dargestellten achten Ausführungsform überein, so dass auf deren vorstehende Beschreibung insoweit Bezug genommen wird.

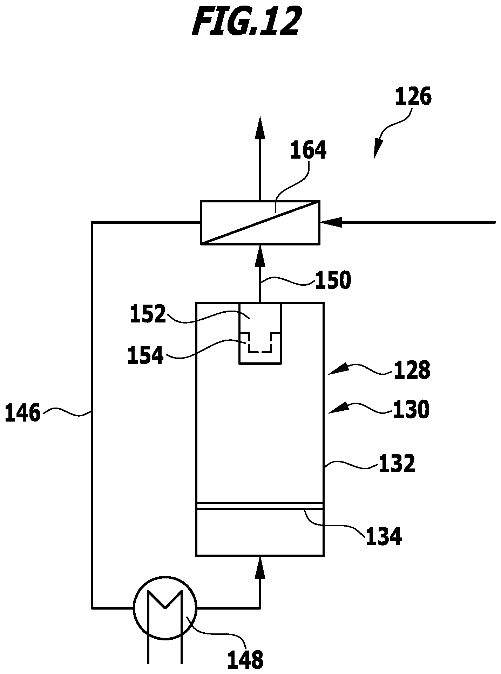

Eine in Fig. 12 dargestellte elfte Ausführungsform einer thermischen Aufbereitungsanlage 126 unterscheidet sich von der in Fig. 3 dargestellten zweiten Ausführungsform im Wesentlichen dadurch, dass die Heizvorrichtung 148 als eine elektrische Heizvorrichtung 148, insbesondere als ein elektrisches Heizaggregat, ausgebildet ist.

Die Heizvorrichtung 148 ist dabei insbesondere eine Unterstützungsheizung.

Im Übrigen stimmt die in Fig. 12 dargestellte elfte Ausführungsform einer Aufbereitungsanlage 126 hinsichtlich Aufbau und Funktion mit der in Fig. 3 dargestellten zweiten Ausführungsform überein, so dass auf deren vorstehende Beschreibung insoweit Bezug genommen wird.

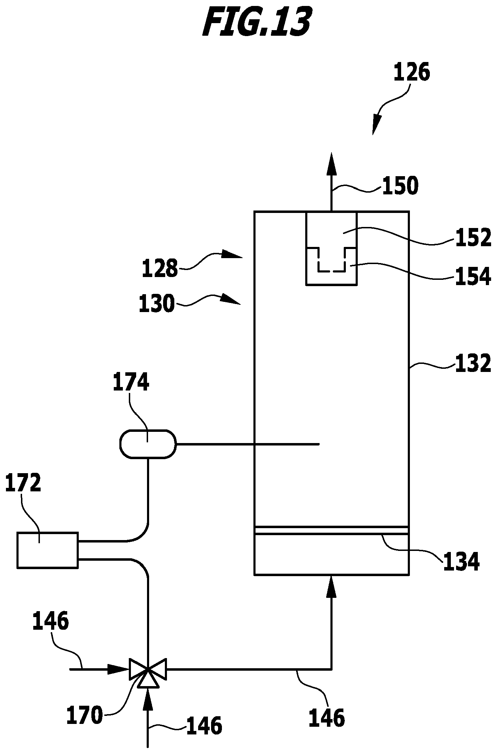

Eine in Fig. 13 dargestellte zwölfte Ausführungsform einer thermischen Aufbereitungsanlage 126 unterscheidet sich von der in Fig. 5 dargestellten vierten Ausführungsform im Wesentlichen dadurch, dass mittels der Ventilanordnung 170 nicht nur unterschiedlich temperierte Luftströme, sondern auch Gasströme unterschiedlicher Zusammensetzung wahlweise einzeln oder gemischt als Zuluft der Aufbereitungsvorrichtung 128 zuführbar sind.

Mittels der Messvorrichtung 174 ist dabei vorzugsweise eine Gaskonzentration, insbesondere eine Sauerstoffkonzentration, in der Aufbereitungsvorrichtung 128 ermittelbar.

In Abhängigkeit von der mittels der Messvorrichtung 174 ermittelten Gaskonzentration kann mittels der Steuervorrichtung 172 Einfluss auf die Ventilanordnung 170 genommen werden, um die Prozessparameter in der Aufbereitungsvorrichtung 128 zu optimieren.

Im Übrigen stimmt die in Fig. 13 dargestellte zwölfte Ausführungsform einer Aufbereitungsanlage 126 hinsichtlich Aufbau und Funktion mit der in Fig. 5 dargestellten vierten Ausführungsform überein, so dass auf deren vorstehende Beschreibung insoweit Bezug genommen wird.

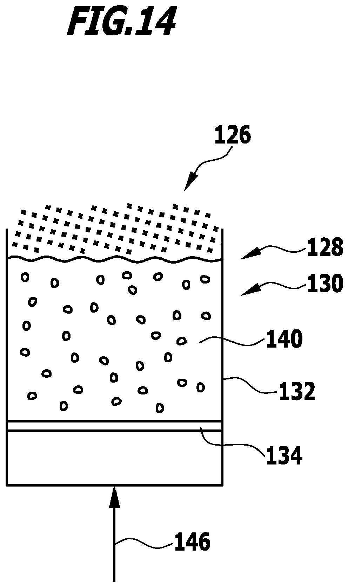

In Fig. 14 ist eine Betriebsart einer Aufbereitungsvorrichtung 128 schematisch dargestellt, bei welcher in der Aufnahme 132 der Aufbereitungsvorrichtung 128 eine blasenbildende Wirbelschicht erzeugt wird.

Bei einer solchen blasenbildenden Wirbelschicht wird das Wirbelschichtbasismaterial und/oder das mit Schadstoff beladene Hilfsmaterial mit Luft durchströmt. Hierbei werden einzelne Feststoffpartikel, insbesondere Teilchen aus Hilfsmaterial und/oder Abrieb von Wirbelschichtbasismaterial, aus der Wirbelschicht ausgetragen.

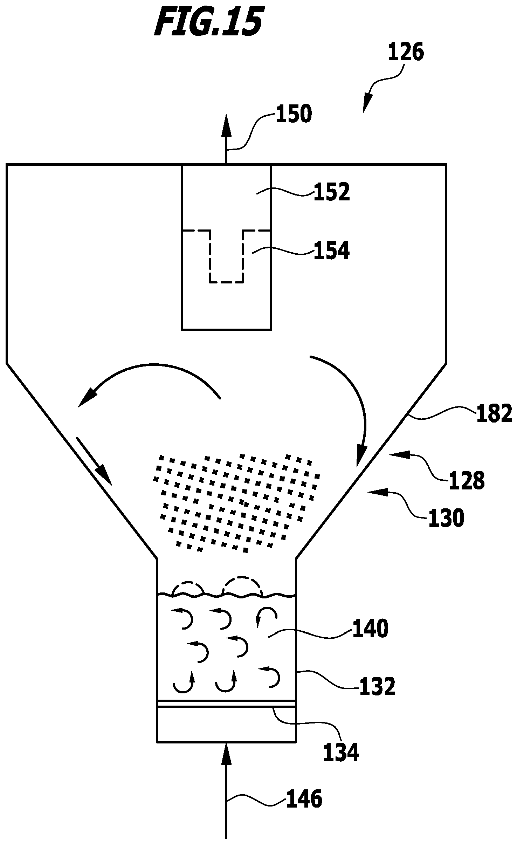

In Fig. 15 ist eine Betriebsart einer Aufbereitungsvorrichtung 128 schematisch dargestellt, bei welcher in der Aufnahme 132 der Aufbereitungsvorrichtung 128 eine zirkulierende Wirbelschicht erzeugt wird.

Bei einer solchen zirkulierenden Wirbelschicht erfolgt eine starke Verwirbelung des Wirbelschichtbasismaterials und/oder des mit Schadstoff beladenen Hilfsmaterials. Ferner erfolgt hierdurch ein massiver Teilchenaustrag aus der Wirbelschicht, d.h., dass eine große Anzahl von Teilchen aus Hilfsmaterial und/oder Abrieb von Wirbelschichtbasismaterial entgegen der Schwerkraftrichtung nach oben aus der Wirbelschicht ausgetragen wird.

Die Aufnahme 132 weist zur Optimierung einer solchen Betriebsweise der Aufbereitungsvorrichtung 128 einen sich entgegen der Schwerkraftrichtung 160 nach oben erweiternden Abschnitt 182 auf, welcher zu einer Verlangsamung der Gasströmung in der Aufnahme 132 der Aufbereitungsvorrichtung 128 führt und ein Zurückrieseln der ausgetragenen Teilchen in die Wirbelschicht 140 ermöglicht.

Ein solcher sich nach oben erweiternder Abschnitt 182 wird auch als "Freeboard" bezeichnet.

Eine in Fig. 16 dargestellte dreizehnte Ausführungsform einer thermischen Aufbereitungsanlage 126 unterscheidet sich von der in Fig. 2 dargestellten ersten Ausführungsform im Wesentlichen dadurch, dass unterhalb der Abscheidevorrichtung 152 ein Sammelbehälter 184 angeordnet ist, mittels welchem von der Abscheidevorrichtung 152 herabfallendes aufbereitetes Hilfsmaterial aufgenommen werden kann.

Da sowohl die Abscheidevorrichtung 152 als auch der Sammelbehälter 184 seitlich versetzt zu der Aufnahme 132 der Aufbereitungsvorrichtung 128 angeordnet sind, wird vermieden, dass das abgeschiedene aufbereitete Hilfsmaterial zurück in die Wirbelschicht 140 gelangt.

Mittels der Abscheidevorrichtung 152 und des Sammelbehälters 184 kann bei der in Fig. 16 dargestellten dreizehnten Ausführungsform einer Aufbereitungsanlage 126 das aufbereitete Hilfsmaterial somit einfach separiert und schließlich mittels der Abführvorrichtung 156 aus der Aufbereitungsvorrichtung 128 abgeführt werden.

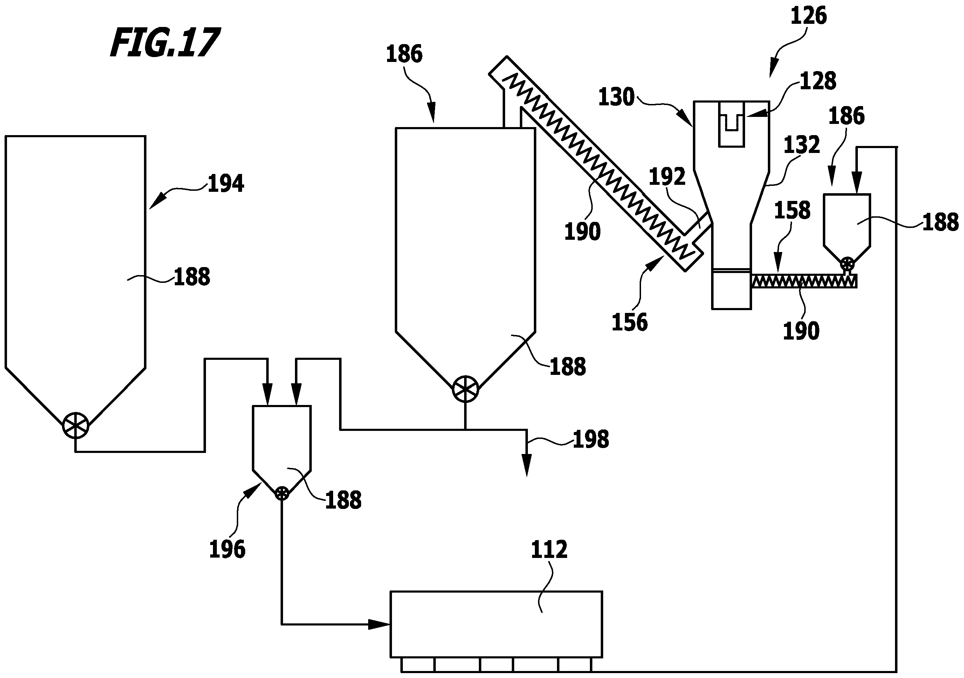

Eine in Fig. 17 dargestellte vierzehnte Ausführungsform einer thermischen Aufbereitungsanlage 126 unterscheidet sich von der in Fig. 2 dargestellten ersten Ausführungsform im Wesentlichen dadurch, dass die Aufbereitungsanlage 126 Puffervorrichtungen 186 umfasst, mittels welchen mit Schadstoff beladenes und/oder aufbereitetes Hilfsmaterial zwischengespeichert werden kann.

Hierzu sind Pufferbehälter 188 der Puffervorrichtungen 186 vorgesehen.

Ein erster Pufferbehälter 188 dient der Aufnahme von mit Schadstoff beladenem Hilfsmaterial aus der Filteranlage 112.

Mittels einer Fördervorrichtung 190, beispielsweise einem Schneckenförderer, insbesondere einer Kühlschnecke oder eines Schneckenwärmetauschers, kann das mit Schadstoff beladene Hilfsmaterial aus dem Pufferbehälter 188 für mit Schadstoff beladenes Hilfsmaterial der Aufbereitungsvorrichtung 128 zugeführt werden.

Die Fördervorrichtung 190 ist somit Bestandteil der Zuführvorrichtung 158.

Mittels der Fördervorrichtung 190 kann das mit Schadstoff beladene Hilfsmaterial insbesondere in dem unteren Bereich 161 der Wirbelschicht 140 dem Wirbelschichtbasismaterial und somit der Wirbelschicht 140 selbst zugeführt werden.

Mittels einer weiteren Fördervorrichtung 190, welche beispielsweise ebenfalls als ein Schneckenförderer ausgebildet ist, kann aufbereitetes Hilfsmaterial, welches mittels eines Überlaufs 192 aus der Aufnahme 132 der Aufbereitungsvorrichtung 128 abgeführt wurde, einem weiteren Pufferbehälter 188 einer weiteren Puffervorrichtung 186 zugeführt werden.

Der Überlauf 192 und die weitere Fördervorrichtung 190 sind somit Bestandteil der Abführvorrichtung 156.

Die Aufbereitungsanlage 126 umfasst ferner eine Speichervorrichtung 194 zum Speichern von frischem Hilfsmaterial, eine Mischungsvorrichtung 196 zum Mischen von aufbereitetem Hilfsmaterial und frischem Hilfsmaterial und/oder eine Entsorgungsvorrichtung 198 zum Entsorgen von zu stark verunreinigtem Hilfsmaterial, insbesondere von zu stark mit Schadstoff verunreinigtem Hilfsmaterial.

Die Speichervorrichtung 194 umfasst einen weiteren Pufferbehälter 188, in welchem beispielsweise mittels Lastkraftwagen angeliefertes frisches Hilfsmaterial zwischengespeichert werden kann.

Die Mischungsvorrichtung 196 umfasst ebenfalls einen Pufferbehälter 188, in welchem eine Mischung aus frischem Hilfsmaterial und aufbereitetem Hilfsmaterial zwischengespeichert werden kann.

Die in Fig. 17 dargestellte vierzehnte Ausführungsform der Aufbereitungsanlage 126 funktioniert wie folgt:
In der Filteranlage 112 wird ein mit Schadstoff beladener Rohgasstrom unter Zuhilfenahme von Hilfsmaterial gereinigt.

Das hierdurch mit Schadstoff beladene Hilfsmaterial muss nach einer gewissen Nutzungsdauer ausgetauscht oder aufbereitet werden.

Mittels der thermischen Aufbereitungsanlage 126 kann eine solche Aufbereitung erfolgen.

Das mit Schadstoff beladene Hilfsmaterial wird hierzu von der Filteranlage 112 einer Puffervorrichtung 186 zugeführt, insbesondere in einem Pufferbehälter 188 für mit Schadstoff beladenes Hilfsmaterial zwischengespeichert.

Von dort aus wird das mit Schadstoff beladene Hilfsmaterial mittels der Fördervorrichtung 190 in die Aufnahme 132 der Aufbereitungsvorrichtung 128 gefördert.

Durch die kontinuierliche Zuführung von mit Schadstoff beladenem Hilfsmaterial zu der Aufbereitungsvorrichtung 128 steigt der Pegel, d.h. die Befüllungshöhe, insbesondere die Höhe der Wirbelschicht 140, kontinuierlich an. Mittels des Überlaufs 192 wird das sich im oberen Bereich 162 der Wirbelschicht 140 ansammelnde aufbereitete Hilfsmaterial aus der Aufnahme 132 der Aufbereitungsvorrichtung 128 abgeführt und über die weitere Fördervorrichtung 190, insbesondere einen Schneckenwärmetauscher, dem Pufferbehälter 188 für das aufbereitete Hilfsmaterial zugeführt. Das Hilfsmaterial wird dabei auf eine Temperatur von höchstens ungefähr 40°C gekühlt, damit es bei Umgebungstemperatur weiter gelagert und gegebenenfalls verarbeitet werden kann. Alternativ zur Verwendung eines Schneckenwärmetauschers kann ein Schüttgutwärmetauscher, bei welchem eine Kühlung durch Vorbeirieseln an Wärmetauscherrohren erfolgt, oder eine pneumatische Förderung mit oder ohne integriertem Wärmetauscher in einer Förderleitung vorgesehen sein.

Von dem Pufferbehälter 188 für aufbereitetes Hilfsmaterial und dem Pufferbehälter 188 für frisches Hilfsmaterial wird das jeweilige Hilfsmaterial der Mischungsvorrichtung 196, insbesondere dem Pufferbehälter 188 der Mischungsvorrichtung 196, zugeführt. Die Mischung umfasst dabei beispielsweise ungefähr 70 % aufbereitetes Hilfsmaterial und ungefähr 30 % frisches Hilfsmaterial.

Das mittels der Mischungsvorrichtung 196 gemischte Hilfsmaterial wird schließlich zur erneuten Verwendung der Filteranlage 112 zugeführt.

Der Antrieb der benötigten Gasströme, insbesondere Luftströme, in der thermischen Aufbereitungsanlage 126 erfolgt vorzugsweise mittels mindestens eines Ventilators, welcher insbesondere sämtliche Druckverluste in der Aufbereitungsanlage 126 überwindet. Die Druckverluste können dabei beispielsweise zwischen ungefähr 200 mbar und ungefähr 300 mbar liegen.

Im Übrigen stimmt die in Fig. 17 dargestellte vierzehnte Ausführungsform der Aufbereitungsanlage 126 hinsichtlich Aufbau und Funktion mit der in Fig. 2 dargestellten ersten Ausführungsform überein, so dass auf deren vorstehende Beschreibung insoweit Bezug genommen wird.

Bei weiteren, nicht dargestellten Ausführungsformen von thermischen Aufbereitungsanlagen 126 kann vorgesehen sein, dass einzelne oder mehrere Merkmale der beschriebenen Ausführungsformen in beliebiger Art und Weise miteinander kombiniert werden.

So kann beispielsweise vorgesehen sein, dass die in Fig. 17 dargestellte vierzehnte Ausführungsform der thermischen Aufbereitungsanlage 126 gemäß der in Fig. 4 dargestellten dritten Ausführungsform mit einer thermischen Nachverbrennungsvorrichtung 168 versehen wird.

Da bei sämtlichen Ausführungsformen von thermischen Aufbereitungsanlagen 126 mit Schadstoff beladenes Hilfsmaterial thermisch aufbereitet und das aufbereitete Hilfsmaterial mittels Gasströmung von dem noch mit Schadstoff beladenem Hilfsmaterial abgetrennt wird, erfolgt die Aufbereitung von Hilfsmaterial besonders einfach und ressourcenschonend.

## Patentansprüche

1. Verfahren zum thermischen Aufbereiten eines Hilfsmaterials, welches zum Reinigen eines mit einem organischen Schadstoff beladenen Rohgasstroms in den Rohgasstrom einbringbar ist und zusammen mit dem organischen Schadstoff ein System aus Schadstoff und Hilfsmaterial bildet, umfassend:
- Zuführen des Systems aus Schadstoff und Hilfsmaterial in eine thermische Aufbereitungsvorrichtung (128);
- chemische Umsetzung wenigstens eines Teils des organischen Schadstoffs zur Erzeugung eines aufbereiteten Hilfsmaterials;
- Abtrennen des aufbereiteten Hilfsmaterials von dem mit einem organischen Schadstoff beladenen Hilfsmaterial;
- Abführen des aufbereiteten Hilfsmaterials aus der thermischen Aufbereitungsvorrichtung (128).

2. Verfahren nach Anspruch 1, **dadurch gekennzeichnet, dass** als Hilfsmaterial ein Filterhilfsmaterial gewählt ist, welches zum Reinigen eines mit einem Schadstoff in Form von Lack-Overspray beladenen Rohgasstroms verwendet wird, wobei das Filterhilfsmaterial mit dem Lack-Overspray ein unter Normalbedingungen stabiles System aus mit Lack-Overspray beladenem Filterhilfsmaterial ausbildet, das an einer Filtervorrichtung abscheidbar ist.

3. Verfahren nach einem der Ansprüche 1 oder 2, **dadurch gekennzeichnet, dass** die Aufbereitungsvorrichtung ein Wirbelschichtbasismaterial enthält, welches eine chemische Zusammensetzung aufweist, die der chemischen Zusammensetzung eines als Hilfsmaterial verwendeten Materials entspricht.

4. Verfahren nach Anspruch 3, **dadurch gekennzeichnet, dass** der Median der Teilchengrößenverteilung des Wirbelschichtbasismaterials größer ist als der Median der Teilchengrößenverteilung des zum Reinigen des Rohgasstroms verwendbaren Hilfsmaterials und/oder als der Median der Teilchengrößenverteilung des Systems aus Schadstoff und Hilfsmaterial.

5. Verfahren nach einem der Ansprüche 1 bis 4, **dadurch gekennzeichnet, dass** das mit Schadstoff beladene Hilfsmaterial in der Aufbereitungsvorrichtung (128) erhitzt wird, so dass Agglomerate aus Schadstoff und Hilfsmaterial aufgebrochen werden.

6. Verfahren nach einem der Ansprüche 1 bis 5, **dadurch gekennzeichnet, dass** das mit Schadstoff beladene Hilfsmaterial in der Aufbereitungsvorrichtung (128) erhitzt wird, so dass der Schadstoff wenigstens teilweise umgewandelt wird, während Teilchen des Hilfsmaterials unverändert bleiben.

7. Verfahren nach einem der Ansprüche 1 bis 6, **dadurch gekennzeichnet, dass** die Aufbereitungsvorrichtung (128) so betrieben wird, dass sich ein Gradient in der Teilchengrößenverteilung des Hilfsmaterials ausbildet, wobei der Median der Teilchengrößenverteilung in der Schwerkraftrichtung (160) nach unten hin zunimmt.

8. Verfahren nach einem der Ansprüche 1 bis 7, **dadurch gekennzeichnet, dass** das mit Schadstoff beladene Hilfsmaterial in einem bezüglich der Schwerkraftrichtung (160) unteren Bereich (161) einer in der thermischen Aufbereitungsvorrichtung (128) durch ein Aufwirbeln erzeugten Wirbelschicht (140) der Wirbelschicht (140) zugeführt wird.

9. Verfahren nach einem der Ansprüche 1 bis 8, **dadurch gekennzeichnet, dass** Teilchen des Systems aus Schadstoff und Hilfsmaterial, Teilchen des aufbereiteten Hilfsmaterials und/oder Teilchen eines Wirbelschichtbasismaterials, welche sich in einem bezüglich der Schwerkraftrichtung (160) oberen Bereich (162) einer durch ein Aufwirbeln erzeugten Wirbelschicht (140) sammeln oder aus der Wirbelschicht (140) herausgetragen werden, aus der Aufbereitungsvorrichtung (128) abgeführt werden.

10. Verfahren nach einem der Ansprüche 1 bis 9, **dadurch gekennzeichnet, dass** der Trägergasstrom zum Aufwirbeln von Hilfsmaterial entgegen der Schwerkraftrichtung (160) von unten nach oben durch das Hilfsmaterial geführt wird, wobei der Trägergasstrom vor und/oder nach dem Durchströmen des Hilfsmaterials einer Abscheidevorrichtung (152) und/oder einer Verbrennungsvorrichtung (166) zugeführt wird.

11. Verfahren nach einem der Ansprüche 1 bis 10, **dadurch gekennzeichnet, dass** Teilchen des Hilfsmaterials mittels des Trägergasstroms aus einer durch ein Aufwirbeln in der thermischen Aufbereitungsvorrichtung (128) erzeugten Wirbelschicht (140) ausgetragen und zum Abführen aus der Aufbereitungsvorrichtung (128) an einer Abscheidevorrichtung (152) abgeschieden werden.

12. Verfahren nach einem der Ansprüche 1 bis 11, **dadurch gekennzeichnet, dass** der Trägergasstrom zum Aufwirbeln des Hilfsmaterials entgegen der Schwerkraftrichtung (160) von unten nach oben durch das Hilfsmaterial geführt wird, wobei der Trägergasstrom vor und/oder nach dem Durchströmen des Hilfsmaterials einem Wärmetauscher (164) und/oder einer Trocknungsvorrichtung (180) zum Trocknen von Werkstücken (104) zugeführt wird.

13. Aufbereitungsanlage zur thermischen Aufbereitung eines Hilfsmaterials, welches zum Reinigen eines mit einem organischen Schadstoff beladenen Rohgasstroms in den Rohgasstrom einbringbar ist und zusammen mit dem organischen Schadstoff ein System aus Schadstoff und Hilfsmaterial bildet, umfassend:
- eine thermische Aufbereitungsvorrichtung (128) zur chemischen Umsetzung wenigstens eines Teils des organischen Schadstoffs zur Erzeugung eines aufbereiteten Hilfsmaterials;
- eine Zuführvorrichtung (158) zum Zuführen des Systems aus Schadstoff und Hilfsmaterial zu der thermischen Aufbereitungsvorrichtung (128);
- eine Abtrennungsvorrichtung (157) zum Abtrennen des aufbereiteten Hilfsmaterials von dem mit einem organischen Schadstoff beladenen Hilfsmaterial;
- eine Abführvorrichtung (156) zum Abführen des aufbereiteten Hilfsmaterials aus der Aufbereitungsvorrichtung (128).

14. Aufbereitungsanlage nach Anspruch 13, **dadurch gekennzeichnet, dass** die Aufbereitungsvorrichtung (128) als ein Wirbelschichtofen (130) ausgebildet ist.

15. Aufbereitungsanlage nach einem der Ansprüche 13 oder 14, **dadurch gekennzeichnet, dass** mittels der Abführvorrichtung (156) Teilchen des Hilfsmaterials in einem bezüglich der Schwerkraftrichtung (160) oberen Bereich (162) einer durch ein Aufwirbeln des Hilfsmaterials in der thermischen Aufbereitungsvorrichtung (128) erzeugten Wirbelschicht (140) aus der thermischen Aufbereitungsvorrichtung (128) abführbar sind.

16. Aufbereitungsanlage nach einem der Ansprüche 13 bis 15, **dadurch gekennzeichnet, dass** die Aufbereitungsanlage (126) eine Abscheidevorrichtung (152) und/oder eine Verbrennungsvorrichtung (166) umfasst, welcher der Trägergasstrom nach Durchströmen der thermischen Aufbereitungsvorrichtung (128) zuführbar ist.

17. Lackieranlage zum Lackieren von Werkstücken (104), insbesondere Fahrzeugkarosserien, umfassend:
- eine Lackiervorrichtung (102), mittels welcher die Werkstücke (104) mit Lack lackierbar sind;
- eine Filtervorrichtung (114) zur Reinigung eines in der Lackiervorrichtung (102) erzeugten, mit Lack-Overspray beladenen Rohgasstroms durch Zuführen von Filterhilfsmaterial zu dem Rohgasstrom und Abscheiden des Lack-Overspray zusammen mit dem Filterhilfsmaterial an einem Filterelement (120) der Filtervorrichtung (114); und
- eine Aufbereitungsanlage (126) nach einem der Ansprüche 13 bis 16,
wobei der organische Schadstoff Lack-Overspray ist und wobei das Hilfsmaterial Filterhilfsmaterial ist.
